# EUROPEAN PATENT SPECIFICATION

(11) **EP 3 965 404 B1**
(45) Date of publication and mention of the grant of the patent: **22.03.2023**
(21) Application number: 21204808.6
(22) Date of filing: 12.09.2018
(51) Int. Cl.: H04L 65/612, H04L 65/60, H04L 67/1021, H04N 21/231, H04N 21/234, H04N 21/4402, H04N 21/24, H04N 21/433, H04N 21/239, H04N 21/2343, H04N 21/8547, H04N 21/643

(54) **DISTRIBUTED VIDEO PACKAGING SYSTEM**
VERTEILTES VIDEOVERPACKUNGSSYSTEM
SYSTÈME D'EMBALLAGE VIDÉO DISTRIBUÉ

(30) Priority: 13.09.2017 US 201762558265 P; 13.12.2017 US 201715841079; 13.12.2017 US 201715841091; 13.12.2017 US 201715841119; 13.12.2017 US 201715841176; 13.12.2017 US 201715841180; 13.12.2017 US 201715841197
(43) Date of publication of application: 09.03.2022
(62) Divisional of application: 18789276.5
(73) Proprietor: Amazon Technologies Inc., Seattle, WA 98108-1226 (US)
(72) Inventor: SLETMOE, Kyle, Seattle, 98109-5210 (US); KOSMATKA, Kristopher, Seattle, 98109-5210 (US); SHOGREN, William, Seattle, 98109-5210 (US); MCCARTHY, Rory, Seattle, 98109-5210 (US); SENGUPTA, Saurav, Seattle, 98109-5210 (US); HERTEL, Gary, Seattle, 98109-5210 (US); KALE, Michael, Seattle, 98109-5210 (US); KRISHNAMOORTHY, Ramya, Seattle, 98109-5210 (US)
(74) Representative: Bosch Jehle Patentanwaltsgesellschaft mbH

(56) References cited:
- US-A1- 2011 083 037
- US-A1- 2013 177 294

## Description

### BACKGROUND

Generally described, computing devices and communication networks can be utilized to exchange data and/or information. In a common application, a computing device can request content from another computing device via the communication network. For example, a user at a personal computing device can utilize a browser application to request a content page (e.g., a network page, a Web page, etc.) from a server computing device via the network (e.g., the Internet). In such embodiments, the user computing device can be referred to as a client computing device and the server computing device can be referred to as a content provider.

Content providers provide requested content to client computing devices often with consideration of efficient transmission of the requested content to the client computing device and/or consideration of a cost associated with the transmission of the content. For larger scale implementations, a content provider may receive content requests from a high volume of client computing devices which can place a strain on the content provider's computing resources. Additionally, the content requested by the client computing devices may have a number of components, which can further place additional strain on the content provider's computing resources.

Some content providers attempt to facilitate the delivery of requested content through the utilization of a content delivery network ("CDN") service provider. As with content providers, CDN service providers also provide requested content to client computing devices often with consideration of efficient transmission of the requested content to the client computing device and/or consideration of a cost associated with the transmission of the content. Accordingly, CDN service providers often consider factors such as latency of delivery of requested content in order to meet service level agreements or the quality of delivery service.

US 2013/177294 describes a system in which a video file is created from a plurality of video segments according to one or more predefined parameters. Each video segment corresponds to a different camera view of a common temporal event. A computing device initiates playback of the video file within a first video segment corresponding to a first camera view. Responsive to a user input command, the computing device changes a playback position of the video file from a current frame number of the first video segment to a destination frame number of a second video segment of the video file. The destination frame number has a predefined relationship to the current frame number. The computing devices continues playback of the video file from the destination frame number within the second video segment corresponding to a second camera view to provide a different perspective of a subject captured in the plurality of video segments.

US 2011/083037 describes a reliable streaming system which increases reliability of live and on-demand streaming media events through a robust server architecture that allows fast failover and recovery in the event of network, hardware, or other failures. The system provides for failover of encoders, ingest servers, which receive encoded media data from encoders, and origin servers, which serve as the retrieval point of last resort for connecting clients. The system also provides a push proxy mechanism that allows one copy of data to feed redundant servers and pre-warm caches, saving on provisioned bandwidth. In addition, the system provides a distribution server role that allows content to be automatically syndicated to a region when needed. Thus, the reliable streaming system provides a streaming solution with no single point of failure and redundancy and fast failover built into the content network architecture.

### BRIEF DESCRIPTION OF THE DRAWINGS

Throughout the drawings, reference numbers may be re-used to indicate correspondence between referenced elements. The drawings are provided to illustrate example embodiments described herein and are not intended to limit the scope of the disclosure.
FIG. 1 is a block diagram of a content delivery environment that includes one or more user devices, a video packaging and origination service and an original content provider according to one embodiment;
FIG 2 is a block diagram of illustrative components of a user computing device configured to remotely process content in accordance with an illustrative embodiment;
FIG. 3 is a block diagram of illustrative components of an encoder component configured to generate encoded content according to synchronization information in accordance with an illustrative embodiment;
FIG. 4 is a block diagram of illustrative components of an ingress node configured to manage encoder content streams in accordance with an illustrative embodiment;
FIG. 5 is a block diagram of illustrative components of an egress node configured to manage content requests from requesting entities in accordance with an illustrative embodiment;
FIG. 6 is a block diagram of illustrative components of a local cache component configured to manage streaming content for processing content requests in accordance with an illustrative embodiment
FIGS. 6A-6C are block diagrams of the content delivery environment of FIG. 1 illustrating the interaction related to video packing and origination service for obtaining encoded content for delivery to user devices; and
FIG. 7 is a flow diagram illustrative of an ingress component routine implemented by a video packaging and origination service;
FIG. 8 is a flow diagram illustrative of an egress component routine implemented by a video packaging and origination service; and
FIG. 9 is a flow diagram illustrative of a content caching routine implemented by a video packaging and origination service.
FIG. 10 is a block diagram of a content delivery environment that includes one or more user devices, a video packaging and origination service and an original content provider according to one embodiment;
FIG 11 is a block diagram of illustrative components of a user computing device configured to remotely process content in accordance with an illustrative embodiment;
FIG. 12 is a block diagram of illustrative components of an encoder component configured to generate encoded content according to synchronization information in accordance with an illustrative embodiment;
FIG. 13 is a block diagram of illustrative components of an ingress node configured to manage multiple encoder content streams in accordance with an illustrative embodiment
FIGS. 14 are block diagrams of the content delivery environment of FIG. 1 illustrating the interaction related to video packing and origination service for obtaining encoded content for delivery to user devices;

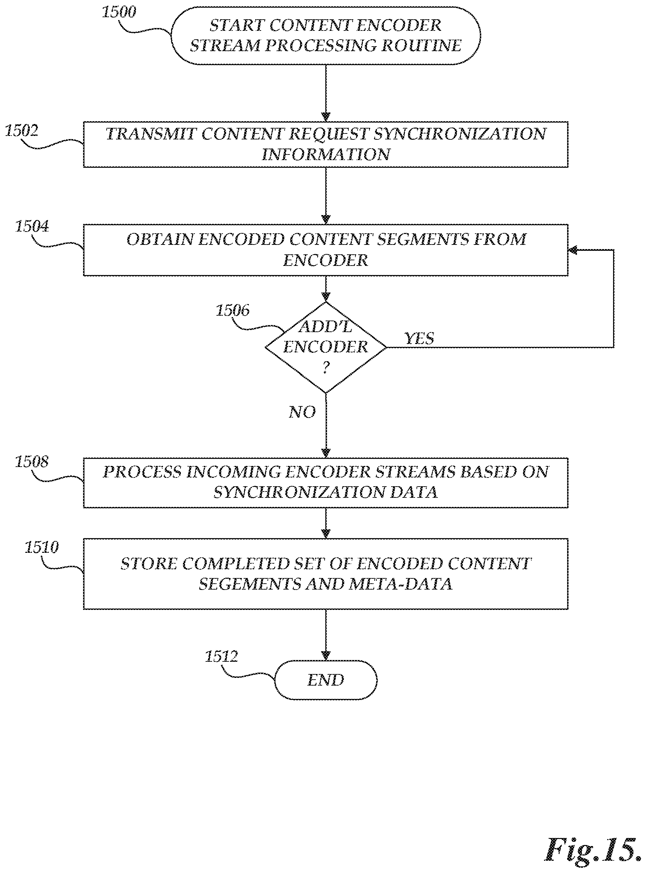

FIG. 15 is a flow diagram illustrative of a content processing routine implemented by a video packaging and origination service; and
FIG. 16 is a flow diagram illustrative of a content processing routine implemented by a content provider to generate multiple content streams.
FIG. 17 is a block diagram of a content delivery environment that includes one or more user devices, a video packaging and origination service and an original content provider according to one embodiment;
FIG. 18 is a block diagram of illustrative components of a user computing device configured to remotely process content in accordance with an illustrative embodiment;
FIG. 19 is a block diagram of illustrative components of an encoder component configured to generate encoded content according to synchronization information in accordance with an illustrative embodiment;
FIG. 20 is a block diagram of illustrative components of an ingress node configured to manage multiple encoder content streams in accordance with an illustrative embodiment
FIGS. 21 are block diagrams of the content delivery environment of FIG. 1 illustrating the interaction related to video packing and origination service for obtaining encoded content for delivery to user devices; and
FIG. 22 is a flow diagram illustrative of a content processing routine implemented by a video packaging and origination service.
FIG. 23 is a block diagram of a content delivery environment that includes one or more user devices, a video packaging and origination service and an original content provider according to one embodiment;
FIG. 24 is a block diagram of illustrative components of a user computing device configured to remotely process content in accordance with an illustrative embodiment;
FIG. 25 is a block diagram of illustrative components of an encoder component configured to generate encoded content according to synchronization information in accordance with an illustrative embodiment;
FIG. 26 is a block diagram of illustrative components of an ingress node configured to manage multiple encoder content streams in accordance with an illustrative embodiment
FIGS. 27 are block diagrams of the content delivery environment of FIG. 1 illustrating the interaction related to video packing and origination service for obtaining encoded content for delivery to user devices;

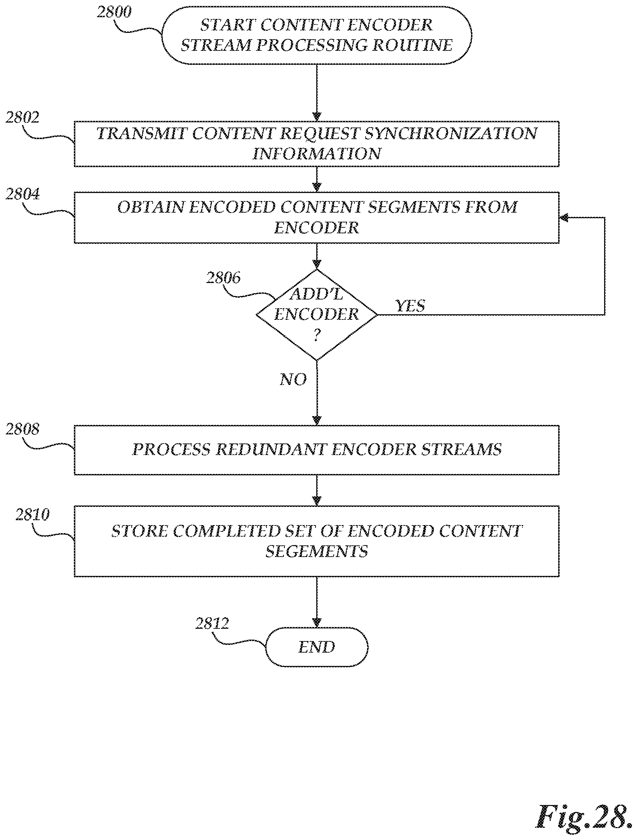

FIG. 28 is a flow diagram illustrative of a content processing routine implemented by a video packaging and origination service; and
FIG. 29 is a flow diagram illustrative of a content processing routine implemented by a content provider to generate multiple content streams.

### DETAILED DESCRIPTION

The invention relates to a system, as further defined in claim 1, and a method, as further defined in claim 6, for managing streaming content.

Generally described, content providers can provide content to requesting users. With regard to video content, a content provider can implement a video packaging and origination service that is able to deliver video content to requesting users. Illustratively, a video packaging and origination service indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more.

To deliver content, content providers can organize requested content, such as a video file, into multiple segments that are then transmitted to requesting devices, segment by segment. For example, in a video stream, each segment typically accounts for 2-10 seconds of video rendered on a receiving device. To provide content to the video packaging and origination service, individual content segments can be encoded by an encoder and transmitted to the video and origination service. Traditionally, a single processing node on the video packaging and origination service can receive an incoming stream of encoded segments and then transmit the stream to requesting user devices.

Video segments can be encoded according to a defined bitrate and format, which generally defines the number of bits of data that are encoded over a measured amount of time and the specific software algorithm and resulting content representation format utilized to encode the data for transmission. For video files, bitrates are typically measured according to how many kilobits or megabits of data are processed over a second of time. By way of example, a data file that corresponds to 1 megabyte of video data encoded in one second would be considered to have an encoding bitrate of 8 mbps (e.g., 8 megabits per second) while a lower definition video file that corresponds to 45 kilobytes of video data processed in one second would be considered to have an encoding bitrate of 360 kbps (e.g., 360 kilobits per second).

In some embodiments, it may be possible for the content provider to facilitate variable bit rate encoding to enable for variances in the encoding bitrates of individual segments of a video file. In such embodiments, the content provider can generate multiple encoded bitrate versions or combinations of encoded bitrates and formats of individual video file segments. The content provider can then make at least a subset of the multiple bitrate encoded versions available to clients responsive to a request for a particular encoded bitrate version and format. Generally, a content provider can generate a catalog identifying the video segments and encoded bitrates for each identified video segment. The catalog can be written into a manifest file that is provided to individual client computing devices that have requested the video file. Thereafter, once all the versions of an encoded segment are received by the packaging and origination service, the packaging and origination service is available to receive and process requests for encoded content. More specifically, client computing devices, through a respective software application, can request individual video segments according to the available encoded bitrates and formats as published in the manifest file.

To receive content, a client computing device can simply request content having a fixed encoding rate or have a fixed encoding rate selected in response to a streaming content request. Such a fixed encoding rate approach can be deficient in facilitating variance of the encoding bitrate (both positive and negative) based on factors, such as network bandwidth, client computing device utilization, quality demands, and the like. In addition to the association of the encoding bitrate, video segments can be further defined by associating the encoding bitrate with the encoding format utilized by the encoder to generate the output stream. The encoding format can correspond to a content representation format for storage or transmission of video content (such as in a data file or bitstream). Examples of encoding formats include but not limited to the motion pictures expert group ("MPEG) MPEG-2 Part 2, MPEG-4 Part 2, H.264 (MPEG-4 Part 10), H.265 high efficiency video coding ("HEVC"), Theora, RealVideo RV40, VP9, and AOMedia Video 1 ("AV1"), and the like.

Traditionally, video packaging and origination services can maintain a single node or server to receive incoming content streams and transmit received streaming content to requesting clients. More specifically, the single node can operate as an ingress node to receive individual content streams or channels corresponding to encoded segments encoded to a specific encoding profile (e.g., encoding bitrate and format). The individual content streams or channels are provided by an original content provider. The single node can utilize state information that facilitates determination that all encoding versions of the same encoded segment have been received. However, the throughput of incoming data streams is limited by characteristics of the single node functionality. For example, an ingress node may experience latencies associated with processing more complex encoded content. In such situation, a video packaging and origination service could experience additional inefficiencies by limiting the ability of the video packaging and origination service to process additional encoding channels related to other encoding profiles until the current encoded data is processed. Similarly, a single node may experience a failure, which will result in downstream unavailability of the content stream.

Additionally, the single node or server traditionally operates as an egress node to process requests for content by transmitting a content stream in the form of a set of encoded segments to a requesting entity, such as a CDN service or user devices. The single node can access the encoded content information received from the original content provider and generate content streams to requesting entities. In such traditional embodiments, the location of the single node (functioning as both an ingress and egress node) can be optimized for the attributes of the original content provider or the attributes of the requesting entity. For example, the single node may be instantiated in a geographic area logically proximate to the original content provider, which can lead to inefficiencies in the transmission of content streams for requesting entities. In another example, the single node may be instantiated in a geographic area logically proximate to one or more requesting entities, which can lead to inefficiencies in the transmission of content streams from the original content provider. In still another example, the computing resources for the single node are often optimized for an identified need of the ingress functionality or the egress functionality, which can lead to inefficiencies in the operation of the single node. For example, a single node may require a larger amount of processing and memory resources to receive and process incoming content streams than would be required to transmit content streams to requesting entities. Thus, scaling egress functionality would require server nodes with much higher computing resource requirements based on the dual function as an ingress node.

To address at least a portion of the inefficiencies described above with regard to single nodes functioning as ingress nodes and egress nodes, aspects of the present application corresponding to a multi-data center, multi-node system for receiving, processing and transmitting encoder streams. More specifically, aspects of the present application correspond to utilization of a set of nodes that function as ingress nodes and a set of nodes that function as egress nodes. The ingress nodes and egress nodes can correspond to separate computing devices or virtualized computing devices that can be configured individually to the relative function as ingress or egress nodes. The ingress and egress nodes can be individually instantiated and located based on the attributes of the original content provider and the video packaging and origination service for the ingress nodes and the attributes of the requesting entity and the video packaging and origination service for the egress nodes.

In accordance with other aspects of the present application, to facilitate interaction between different ingress and egress nodes, a video packaging and origination service can implement one or more services to manage the instantiated ingress nodes, the instantiated egress nodes and the interaction between ingress and egress nodes. Illustratively, an ingress node management service can monitor the operation of ingress nodes and facilitate the storage of processed encoding stream information, including redundant content stream ingestion. An egress management service can monitor the operation of egress nodes and facilitate access to the stored processed encoding stream information. In one embodiment, the ingress node management service and the egress management service, collectively a content management service, can utilize an index that identifies the stored location of individual encoded segments from a set of encoded segments corresponding to streaming content. The content management service can generate the index based on input from the ingress nodes that can identify the location and attributes on received encoded content segments. Additionally, the content management service can provide the index to all egress nodes information to allow for access to the encoded content segments at the time of responding to requests for streaming content. In this regarding, the egress nodes can dynamically generate content packages by collecting or compiling the stored, processed segments as identified in the index.

In still further aspects of the present application, the video packaging and origination service can further include a caching mechanism to facilitate the transmission of the streaming content. More specifically, individual geographic locations of sets of egress nodes may be associated with local caching resources to facilitate increased throughput or performance in responding to content requests. The local caching resources may be populated from the generated index. Additionally, management of the cached information can be optimized based on historical demand for content that has not yet been requested or to maintain encoded content in the cache beyond traditional cache management processes.

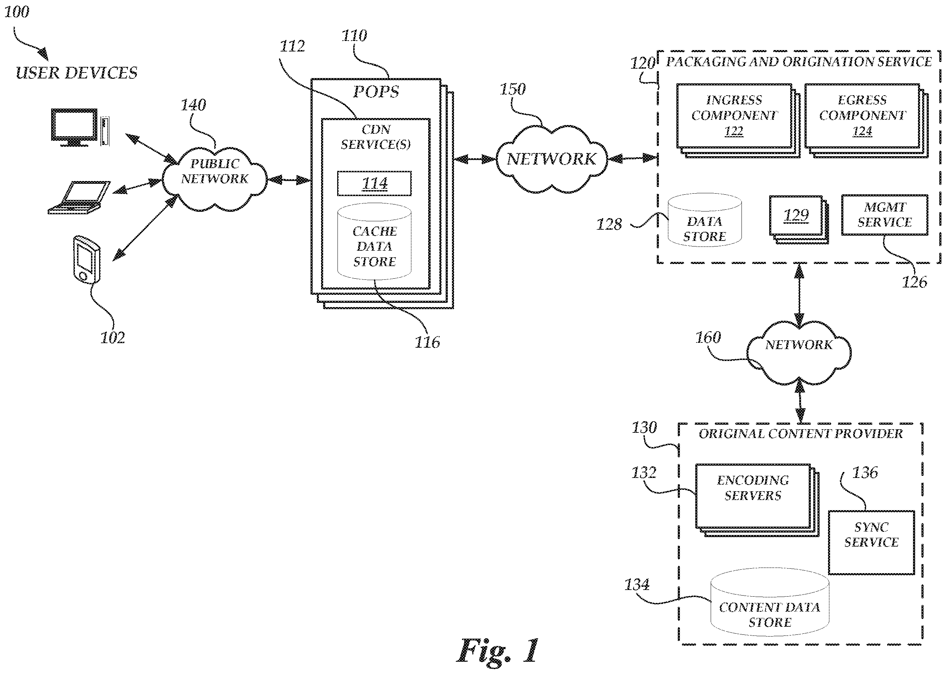

FIG. 1 illustrates a general content delivery environment 100 for delivering content from original content providers to user devices. The content delivery environment 100 includes a plurality of devices 102 utilized by individual users, generally referred to as client computing devices, to request streaming or download content from a video packaging and origination service 120. Illustratively, the video packaging and origination service 120 indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Smooth Streaming, Real Time Messaging Protocol ("RTMP"), and the like. Based on consumer demand, a video packaging and origination service can also provide advanced video transmission features such as just-in-time packaging of video content, digital rights management ("DRM") encryption, time-shifting, bitrate selection, catch up TV, and more. The content can be illustratively provided by one or more origin sources, such as original content provider 130.

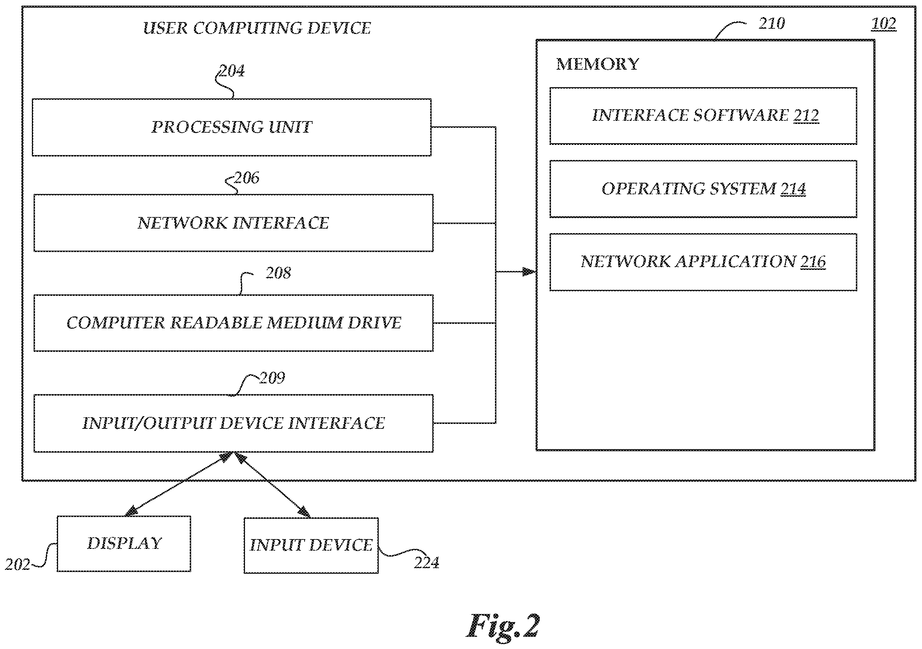

Client computing devices 102 may include any number of different computing devices capable of communicating with the networks 140, 150, 160, via a direct connection or via an intermediary. For example, individual accessing computing devices may correspond to a laptop or tablet computer, personal computer, wearable computer, server, personal digital assistant (PDA), hybrid PDA/mobile phone, mobile phone, electronic book reader, set-top box, camera, appliance (e.g. a thermostat or refrigerator), controller, digital media player, watch, glasses, a home or car device, Internet of Thing ("IoT") devices, virtual reality or augmented reality devices, and the like. Each client computing device 102 may optionally include one or more data stores (not shown in FIG. 1) including various applications or computer-executable instructions, such as web browsers, used to implement the embodiments disclosed herein. Illustrative components of a client computing device 102 will be described with regard to FIG. 2.

In some embodiments, a CDN service provider 110 may include multiple edge locations from which a user device can retrieve content. Individual edge location 112 may be referred to herein as a point of presence ("POP"), where a POP is intended to refer to any collection of related computing devices utilized to implement functionality on behalf of one or many providers. POPs are generally associated with a specific geographic location in which the computing devices implementing the POP are located, or with a region serviced by the POP. As illustrated in FIG 1, the POP 110 can include one or more metric information processing component 114 for processing metric information provided by client computing devices 102 and a data store 116 for maintain collected metric information. For example, a data center or a collection of computing devices within a data center may form a POP. In some instances, the POPs may implement one or more services, such as CDN services, data storage services, data processing services, etc. The CDN service provider 110 may include multiple POPs located in different geographic locations so that user devices can communicate with a nearby a POP to retrieve content, thereby reducing the latency of delivering requested content.

Networks 140, 150, 160 may be any wired network, wireless network, or combination thereof. In addition, the networks 140, 150, 160 may be a personal area network, local area network, wide area network, cable network, fiber network, satellite network, cellular telephone network, data network, or combination thereof. In the example environment of FIG. 1, network 140 is a global area network (GAN), such as the Internet. Protocols and components for communicating via the other aforementioned types of communication networks are well known to those skilled in the art of computer communications and thus, need not be described in more detail herein. While each of the client computing devices 102 and video packaging and origination service 110 are depicted as having a single connection to the network 140, individual components of the client computing devices 102 and video packaging and origination service 110 may be connected to the network 130 at disparate points. Accordingly, communication times and capabilities may vary between the components of FIG. 1. Likewise, although FIG. 1 is illustrated as having three separate networks 140, 150, 160, one skilled in the relevant art will appreciate that the video packaging and origination service 110 may utilize any number or combination of networks.

In accordance with embodiments, the video packaging and origination service 120 includes one or more servers for receiving content from original content providers 130 and processing the content to make available a set of received encoded bitrate segments. As described in further detail below, the video packaging and origination service 120 includes a plurality of ingress components 122 utilized to receive encoded data streams from encoding servers 132 from content providers 130. Illustratively, the ingress components 122 can generate deterministic data that will facilitate a determination of when a complete set of encoded content segments have been received and is ready for further processing or transmission. The video packaging and origination service 120 also includes one or more servers for receiving content requests for a requesting entity, such as a POP 110 or user device 102, accessing encoded content utilizing an index and transmission encoded content in return. The ingress components 122 and egress components 124 may be distributed according to geographic criteria or availability zones to facilitate delivery or access to encoded content.

The video packaging and origination service 120 can further include management services 126 for generating synchronization information utilized by the encoders, such as sequence numbers corresponding to the set of encoded segments, time stamp information related to a relative time of the encoded segments or from which relative time of encoded segments will be based, and the like. The management services 126 can control the generation or instantiation of additional ingress and egress components or the generation of the indices utilized to identify content. Still further, the video packing and origination service 120 can include a plurality of cache components 129 that maintain encoded content in one or more distinct availability zones, such as different geographic areas or zones. The video packaging and origination service 120 can further include a data store 128 for maintaining received encoded data for transmission.

It will be appreciated by those skilled in the art that the video packaging and origination service 120 may have fewer or greater components than are illustrated in FIG. 1. Thus, the depiction of the video packaging and origination service 120 in FIG. 1 should be taken as illustrative. For example, in some embodiments, components of the video packaging and origination service 120 may be executed by one more virtual machines implemented in a hosted computing environment. A hosted computing environment may include one or more rapidly provisioned and released computing resources, which computing resources may include computing, networking or storage devices. Still further, aspects of the present application relate to the selection of individual ingress servers 122, egress servers 124 and local cache components 129 based on attributes of the components, such as geographic information, logical network information, and the like. Accordingly, while such components are illustrated as logically being logically grouped in FIG. 1, one skilled in the relevant art will appreciate that one or more aspects of the present application can include the video packaging and origination service 120 as being implemented in multiple geographic areas. Additionally, not all geographic areas hosting portions of the video packaging and origination service 120 will necessary have all the same components or combination of components.

With continued reference to FIG. 1, the content delivery environment 100 also includes original content providers 130. Illustratively, the original content provider can include a plurality of encoders 132 for generating multiple encoded streams for transmission to the video packaging and origination service 120. In one embodiment, individual encoders may generate different encode versions of a content segment according to a different encoding profile. The original content provider 130 can also include logic or other management components for determining how many encoders 132 should be utilized or how to manage the addition or removal of encoders. In some embodiments, the original content provider the original content provider 130 can further include synchronization services 136 for generating synchronization information utilized by the encoders, such as sequence numbers corresponding to the set of encoded segments, time stamp information related to a relative time of the encoded segments or from which relative time of encoded segments will be based, and the like. The video packaging and origination service 120 can further include a data store 134 for maintaining encoded data for transmission. The synchronization services 124 and 136 may work in conjunction or in a complimentary basis.

FIG. 2 depicts one embodiment of an architecture of an illustrative user computing device 102 that can generate content requests and process metric information in accordance with the present application. The general architecture of the user computing device 102 depicted in FIG. 2 includes an arrangement of computer hardware and software components that may be used to implement aspects of the present disclosure. As illustrated, the user computing device 102 includes a processing unit 204, a network interface 206, an input/output device interface 209, an optional display 202, and an input device 224, all of which may communicate with one another by way of a communication bus.

The network interface 206 may provide connectivity to one or more networks or computing systems, such as the network 140 of FIG. 1 and the video packaging and origination service 120 or the original content provider 130. The processing unit 204 may thus receive information and instructions from other computing systems or services via a network. The processing unit 204 may also communicate to and from memory 210 and further provide output information for an optional display 202 via the input/output device interface 209. The input/output device interface 209 may also accept input from the optional input device 224, such as a keyboard, mouse, digital pen, etc. In some embodiments, the user computing device 102 may include more (or fewer) components than those shown in FIG. 2.

The memory 210 may include computer program instructions that the processing unit 204 executes in order to implement one or more embodiments. The memory 210 generally includes RAM, ROM, or other persistent or non-transitory memory. The memory 210 may store an operating system 214 that provides computer program instructions for use by the processing unit 204 in the general administration and operation of the user computing device 102. The memory 210 may further include computer program instructions and other information for implementing aspects of the present disclosure. For example, in one embodiment, the memory 210 includes a network application 216, such as browser application or media player, for accessing content and communicating with the video packaging and origination service 120.

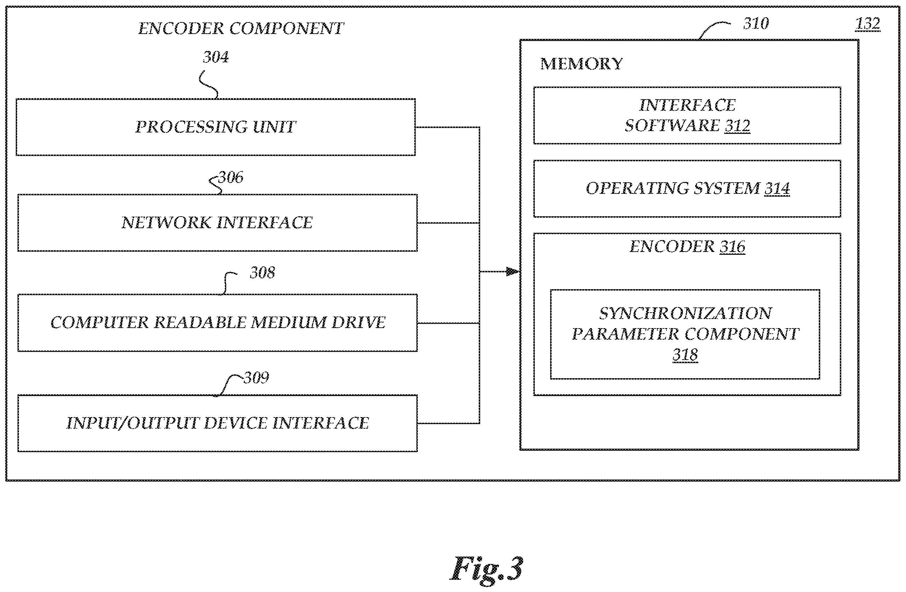

FIG. 3 depicts one embodiment of an architecture of an illustrative server for encoding content as described herein. The general architecture of the encoder 132 depicted in FIG. 3 includes an arrangement of computer hardware and software components that may be used to implement aspects of the present disclosure. As illustrated, the encoder 132 includes a processing unit 304, a network interface 306, a computer readable medium drive 308, an input/output device interface 309, all of which may communicate with one another by way of a communication bus. The components of the encoder 132 may be physical hardware components or implemented in a virtualized environment.

The network interface 306 may provide connectivity to one or more networks or computing systems, such as the network 150 or network 160 of FIG. 1. The processing unit 304 may thus receive information and instructions from other computing systems or services via a network. The processing unit 304 may also communicate to and from memory 310 and further provide output information for an optional display via the input/output device interface 309. In some embodiments, the encoder 132 may include more (or fewer) components than those shown in FIG. 3.

The memory 310 may include computer program instructions that the processing unit 304 executes in order to implement one or more embodiments. The memory 310 generally includes RAM, ROM, or other persistent or non-transitory memory. The memory 310 may store an operating system 314 that provides computer program instructions for use by the processing unit 304 in the general administration and operation of the video packaging and origination service 120. The memory 310 may further include computer program instructions and other information for implementing aspects of the present disclosure. For example, in one embodiment, the memory 310 includes interface software 312 for receiving and processing content requests from the video packaging and origination services 120.

Additionally, the memory 310 includes an encoder component 316 for processing content segments. Additionally, the encoder component 316 can further include a synchronization parameter component 318 for utilizing the synchronization information in the encoding process to increase the likelihood that encoded segments from multiple encoders can be utilized by a video packaging and origination service 120. The synchronization information can be utilized in the generation of deterministic data as will be described below.

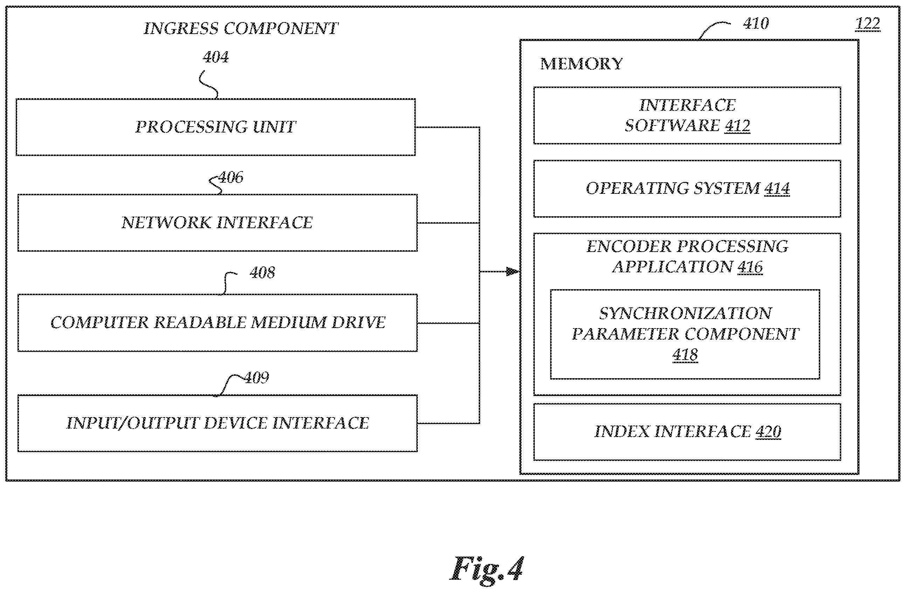

FIG. 4 depicts one embodiment of an architecture of an illustrative server for functioning as an ingress component 122 as described herein. As described above, the video packaging and origination service 120 includes multiple ingress components 122 (or nodes) that facilitate intake of encoded segments that have been encoded according to different encoding profiles. The general architecture of the ingress component 122 depicted in FIG. 4 includes an arrangement of computer hardware and software components that may be used to implement aspects of the present disclosure. As illustrated, the ingress component 122 includes a processing unit 404, a network interface 406, a computer readable medium drive 408, an input/output device interface 409, all of which may communicate with one another by way of a communication bus. The components of the ingress component 122 may be physical hardware components or implemented in a virtualized environment.

The network interface 406 may provide connectivity to one or more networks or computing systems, such as the network 150 or network 160 of FIG. 1. The processing unit 404 may thus receive information and instructions from other computing systems or services via a network. The processing unit 404 may also communicate to and from memory 410 and further provide output information for an optional display via the input/output device interface 409. In some embodiments, the ingress component 122 may include more (or fewer) components than those shown in FIG. 4.

The memory 410 may include computer program instructions that the processing unit 404 executes in order to implement one or more embodiments. The memory 410 generally includes RAM, ROM, or other persistent or non-transitory memory. The memory 410 may store an operating system 414 that provides computer program instructions for use by the processing unit 404 in the general administration and operation of the ingress node. The memory 410 may further include computer program instructions and other information for implementing aspects of the present disclosure. For example, in one embodiment, the memory 410 includes interface software 412 for receiving and processing content from encoders 132. Additionally, the memory 410 includes an encoder processing application 416 for processing incoming encoded content segments. The ingress component 122 can further include a synchronization parameter component 418 for utilizing the synchronization information to generate the deterministic information as described above. Still further, the ingress component 122 can also include an index interface 420 for writing deterministic data or providing deterministic data to generate index of stored content segments.

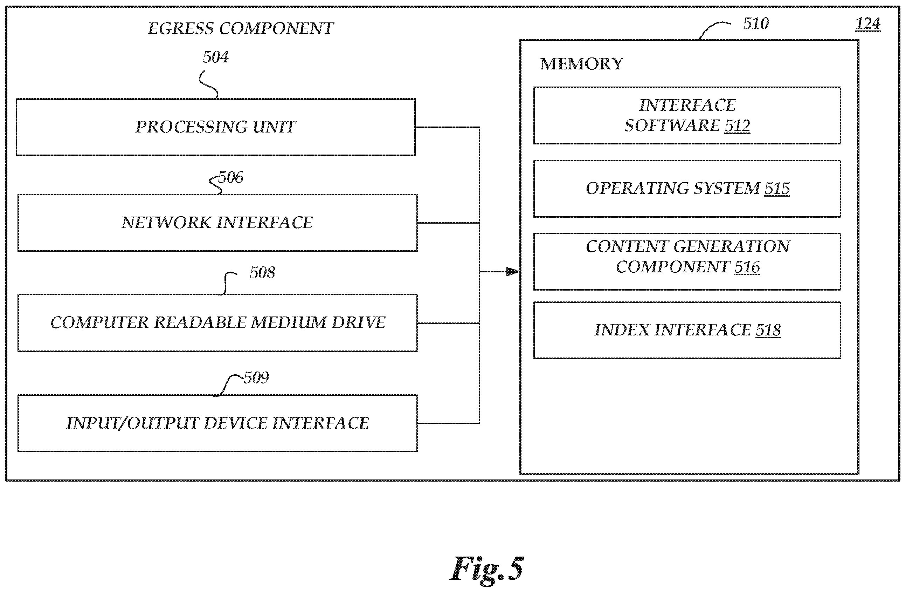

FIG. 5 depicts one embodiment of an architecture of an illustrative server for functioning as an egress component 124 as described herein. As described above, the video packaging and origination service 120 includes multiple egress components 124 (or nodes) that facilitate intake of encoded segment content requests from different requesting entities, such as CDN 110 or user devices 102. The general architecture of the egress component 124 depicted in FIG. 5 includes an arrangement of computer hardware and software components that may be used to implement aspects of the present disclosure. As illustrated, the egress component 124 includes a processing unit 504, a network interface 506, a computer readable medium drive 508, an input/output device interface 509, all of which may communicate with one another by way of a communication bus. The components of the egress component 124 may be physical hardware components or implemented in a virtualized environment.

The network interface 506 may provide connectivity to one or more networks or computing systems, such as the network 150 or network 160 of FIG. 1. The processing unit 504 may thus receive information and instructions from other computing systems or services via a network. The processing unit 504 may also communicate to and from memory 510 and further provide output information for an optional display via the input/output device interface 509. In some embodiments, the egress component 124 may include more (or fewer) components than those shown in FIG. 5.

The memory 510 may include computer program instructions that the processing unit 504 executes in order to implement one or more embodiments. The memory 510 generally includes RAM, ROM, or other persistent or non-transitory memory. The memory 510 may store an operating system 514 that provides computer program instructions for use by the processing unit 504 in the general administration and operation of the egress component 124. The memory 510 may further include computer program instructions and other information for implementing aspects of the present disclosure. For example, in one embodiment, the memory 510 includes interface software 512 for receiving and processing content requests from requesting entities. Additionally, the memory 510 includes a content generation component 516 for processing received encoded content segments from an index. Additionally, the egress component 124 can further include an index component 518 for generating the encoded content streams by accessing encoded content segments as identified in the index information as described above.

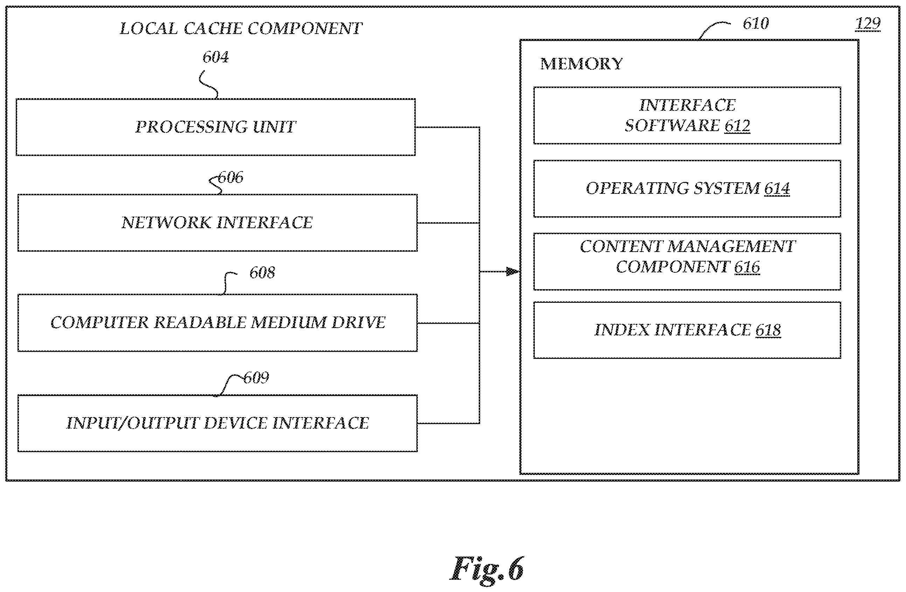

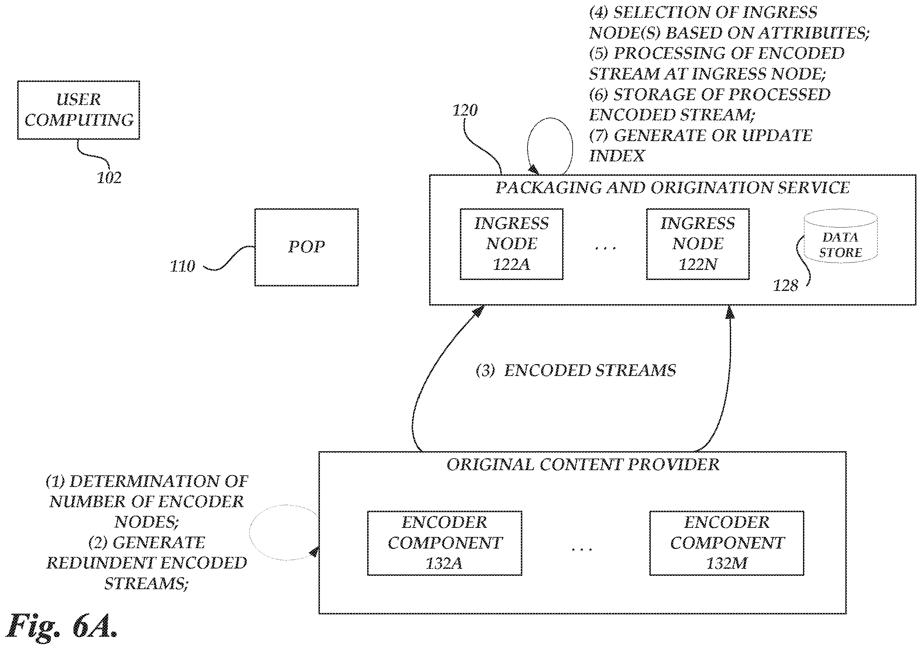

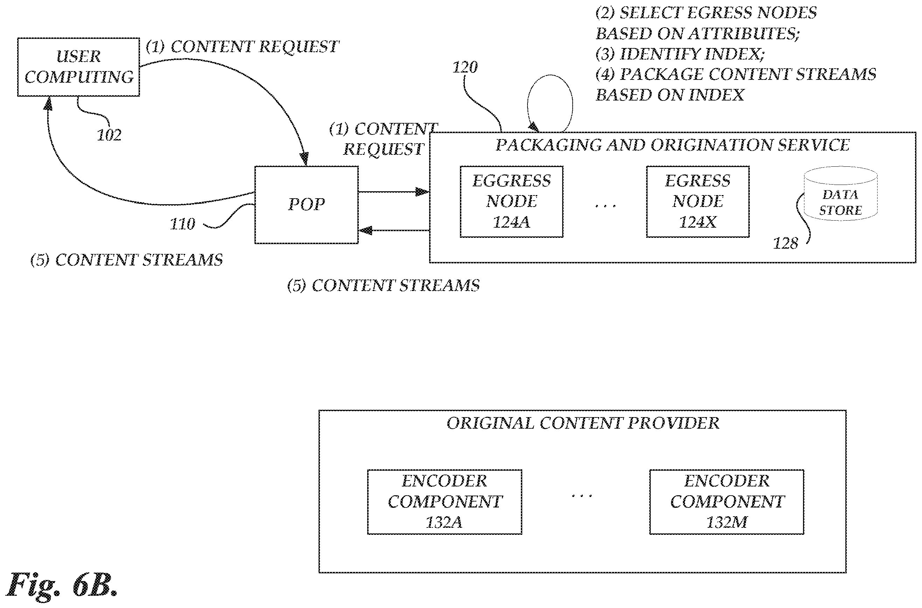

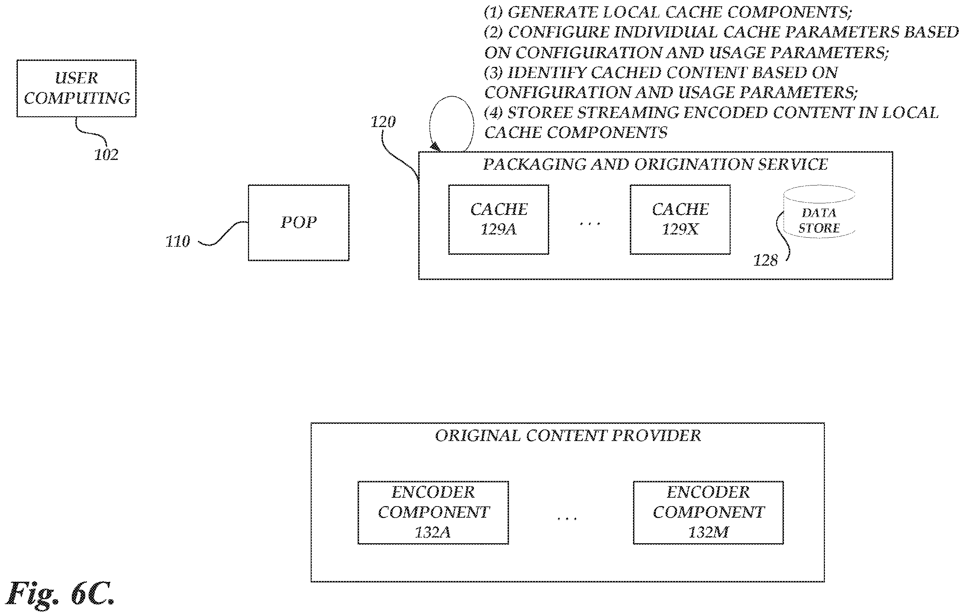

FIG. 6 depicts one embodiment of an architecture of an illustrative server for functioning as a cache component 129 as described herein. As described above, the video packaging and origination service 120 includes cache components 129 (or nodes) that facilitate the management of content streams to requesting users. Illustratively, the cache components 129 are part of the video packaging and origination service 120 and can be managed in manner to optimize the processing and transmission of content streams to requesting users. The cache components 129 may correspond to local cache components that serve one or more distinct geographic areas. For example, a cache component 129 can have a one-to-one association with a specific geographic region or logical zone and can be optimized according to the attributes of the specific geographic region or logical zone. In another example, a cache component 129 can have a one-to-many association with multiple geographic zones or logical zones and can be optimized to according to the attributes of individual geographic zones or logical or multiple geographic zones or logical zones.

The general architecture of the cache component 129 depicted in FIG. 6 includes an arrangement of computer hardware and software components that may be used to implement aspects of the present disclosure. As illustrated, the cache component 129 includes a processing unit 604, a network interface 606, a computer readable medium drive 608, an input/output device interface 609, all of which may communicate with one another by way of a communication bus. The components of the cache component 129 may be physical hardware components or implemented in a virtualized environment.

The network interface 606 may provide connectivity to one or more networks or computing systems, such as the network 160 or network 160 of FIG. 1. The processing unit 604 may thus receive information and instructions from other computing systems or services via a network. The processing unit 604 may also communicate to and from memory 610 and further provide output information for an optional display via the input/output device interface 609. In some embodiments, the cache component 129 may include more (or fewer) components than those shown in FIG. 6.

The memory 610 may include computer program instructions that the processing unit 604 executes in order to implement one or more embodiments. The memory 610 generally includes RAM, ROM, or other persistent or non-transitory memory. The memory 610 may store an operating system 614 that provides computer program instructions for use by the processing unit 604 in the general administration and operation of the cache component 129. The memory 610 may further include computer program instructions and other information for implementing aspects of the present disclosure. For example, in one embodiment, the memory 610 includes interface software 612 for receiving and processing content caching commands from the content management services 126 and requests from requesting egress servers 124. Additionally, the memory 610 includes a content generation component 616 for processing received encoded content segments from an index for storage. Content generation component 616 also includes or access the mass storage utilized to maintain cached content. Additionally, the ingress component 122 can further include an index interface component 618 for obtaining and processing indexes to identify encoded content segments that make up the requesting encoded content.

Turning now to FIGS. 6A -6C, an illustrative interaction for the processing of content requests will be described. With reference first to FIG. 6A, at (1), the original content provider 130 determine a number of encoder nodes 132 to transmit a set of encoded content segments. Illustratively, the original content provider 130 can be configured to identify the requested content and the manner of how the encoded content will be transmitted. For example, the original content provider 130 can received configuration information that identifies whether a single encoder will be utilized to transmit encoded streams, whether multiple encoders will be utilized to transmit encoded streams, whether multiple encoders will be utilized to transmit redundant encoded streams, and the like. Although two encoders are illustrated in FIG. 6A, one skilled in the relevant art will appreciate that additional or alternative number of encoders 132 may be utilized.

At (2), the original content provider 130 causes one or more encoders to generate encoded streams based on synchronization information. As described above, the video packaging and origination service 120 may provide synchronization information, such as timestamp information or sequence information that allows multiple encoders to transmit at least some portion of the encoded content. In another embodiment, the original content provider 130 can utilize self-providing synchronization, information provided by a third-party service or a combination. Still further, if a single encoder is utilized, synchronization information may not be required to transmit encoded content to the video packaging and origination service 120. Illustratively, the original content provider 130 (whether through a single or a plurality of encoding servers 132A and 132B) can provide multiple encoder streams that can correspond to individual content streams corresponding to the different requested encoding profiles. For example, a first content stream can correspond to a first encoding bitrate and format (e.g., a first encoding profile) and a second content stream can correspond to a second encoding bitrate and format that is different. At (3), the content provider transmits the one or more content streams.

The video packaging and origination service 120 receives the plurality of incoming encoded content streams from the encoders. More specifically, at (4), the content management service 126, such as via an ingress microservice, selects an ingress node or component 122 based on attributes of the original content provider 130, the video packaging and origination service 120 or a combination. Such attributes may include geographic information, network location or traffic information, user configurations, general service levels, resource load information, and the like. For example, the video packaging and origination service 120 can identify a computing device that will function as the ingress component 122 and that is located in a region or availability zone that is determined to be proximate to the original content provider 130. In another example, the video packaging and origination service 120 can identify a computing device that will function as ingress component 122 and that is associated with sufficient processing resources as anticipated to receive and process incoming content segments. In still another example, the video packaging and origination service 120 can identify a computing device that will function as the ingress component 122 based on the correlation of the target computing device to specific types of content, content providers, or requesting entities.

At (5), the content management system instantiates or causes an instantiated ingress component 122 to receive and process the encoded segments from a first received stream. Illustratively, the ingress component 122 of the video packaging and origination service 120 processes the received encoded segments to generate deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. The deterministic data will be illustratively utilized to identify a same content segment or matching content segments that have been encoded according to different encoding profiles and received at different ingress components. For example, four content segments sharing a common timestamp of play but encoded according to the different encoding profiles are considered to be the same content segment. The ingress component 122 can also format or translate the incoming content to generate different encoding bitrate and format combinations or packages. In another example, the ingress component 122 or content management service 126 can conduct quality or error checking that can be included in meta-data.

At (6), the ingress component 122 stores the encoded data stream. Illustratively, the ingress component 122 may store all received encoded content regardless of whether it is duplicative or alternative to what will be used by the video packaging and origination service 120. As will be described in greater detail below, the ingress component 122 can illustratively utilize local storage resources to maintain the received encoded content segments regardless of whether the local storage resources maintain all the received encoded content segments. At (7), the ingress component 122 causes the generation or updating of an index identifying the location of the received encoded content. As will be described below, the index will be utilized by a separate egress component 124 to respond to content requests from requesting entities. Illustratively, the index may be made up of one or more files that include relevant identifiers utilized by the video packaging and origination service 120 to identify the storage location of the received and processed encoded components. In some embodiments, the index files may be serialized in a manner to facilitate transmission of the index to other computing devices or storage in memory.

With reference now to FIG.6B, interactions between components of the content delivery environment 100 illustrating the processing of streaming content requests from requesting entities will be described. At (1), the user device directly or through POP 110 transmits a request for encoded content to the video packaging and origination service 120. The interaction between the requesting entities and the video packaging and origination service 120 can include multiple interactions to identify available content and receive request for content. For example, a user device 102 may generate various user interfaces or software applications that facilitate the selection of content that are directed to the video packaging and origination service 120. As illustrated in FIG. 6B, the content requests from user devices 102 may be transmitted via a POP 110 or alternatively be transmitted directly from user devices 102 to the video packaging and origination service 120.

Illustratively, the video packaging and origination service 120 receives one or more requests for encoded content streams from requesting entities. To begin processing the content requests, at (2), the content management service 126 selects an egress node or component 124 based on attributes of the requesting entity (user 102 or POP 110), the video packaging and origination service 120 or a combination. Such attributes may include geographic information, network location or traffic information, user configurations, general service levels for delivery of content, technical configuration information, and the like. For example, the video packaging and origination service 120 can identify a computing device that will function as the egress component 124 and that is located in a region or availability zone that is determined to be proximate to the requesting entity. In another example, the video packaging and origination service 120 can identify a computing device that will function as egress component 124 and that is associated with a communication latency that meets a service level agreement threshold or that is specified by a user. In still a further example, the video packaging and origination service 120 can select an egress component 124 that is optimized for the transmitting content streams to a particular requesting entity, such as by custom communication protocol or security requirements. Illustratively, the video packaging and origination service 120 can utilize the same criteria (or different criteria) as the criteria utilized to identify the ingress component 122 (FIG. 6A), but the evaluation of the criteria may yield identification of the different computing devices based on consideration of the differences in attributes between a content source 130 and the requesting entities.

At (3), the content management system instantiates or causes an instantiated egress component 124 to identify and process the index of the encoded segment requests from a first received stream. Illustratively, the egress component 124 of the video packaging and origination service 120 processes the received index to identify the storage location of the encoded segments previously processed and stored by the ingress components 122. The egress component 124 can access an index that is available in a known storage location or that is otherwise made available to the egress component 124.

At (4), the egress component 124 packages the encoded content to generate the content streams based on the identified storage location of the encoded data stream. In this regard, the egress component 124 can dynamically access individual encoded content segments at different storage locations associated with ingress components 122. The packing of the encoded content segments for transmission as encoded content streams (e.g., encoded bitrate and format) can occur at the time of request which facilitates the management of individual encoded content segments (e.g., removing one segment for another). At (5), the egress component 124 causes the transmission of the content responsive to the content request. One skilled in the relevant art will appreciate that the transmission of content segments to requesting entities can include a number of interactions and considerate of the specific protocols implemented to stream content.

With reference now to FIG.6C, the generation of distributed caching resources by the video packaging and origination service 120 will be described. At (1), the content management service 126 selects and generates local cache components based on attributes of the requesting entity (user 102 or POP 110), the video packaging and origination service 120 or a combination. Such attributes may include geographic information, network information, user configurations, general service levels, storage requirements, and the like. Illustratively, the video packaging and origination service 120 can maintain a cache component in identified regions or availability zones to facilitate the delivery of content. Additionally, the local cache components may be instantiated by the video packaging and origination service 120 in a manner that facilitates that management of the cache components. As will be described in greater detail, one or more aspects of individual local cache components can be optimized based on usage and configuration information.

At (2), the video packaging and origination service 120 configures the individual properties of the cache component based on the received usage and configuration information. In one embodiment, the video packaging and origination service 120 can allocate different amounts of the cache data storage based on a characterization of the content streams, such as a characterization of quality, popularity, importance, and the like. The usage and configuration information may include information from the content provider 130, similar subject matter, user information, and the like. For example, the video packaging and origination service 120 can identify content that has been characterized as heavily in demand based on historical information indicative request load. In such an example, the video packaging and origination service 120 can configure one or more local cache components to process the indexes to make the encoded content available for streaming. In another example, the egress component 122 may provide the usage and configuration information to the video packaging and origination service 120 to facilitate the local caching of content streams, such as content streams predicted to be popular or in which minimum service delivery levels are required.

At (3), the video packaging and origination service 120 identifies cache content based on usage and configuration information. For example, the video packaging and origination service 120 can identify content that should be included in the cache data storage based on a characterization of the content streams, such as a characterization of quality, popularity, importance, and the like. As described above, the usage and configuration information may include information from the content provider 130, similar subject matter, user information, and the like. For example, the video packaging and origination service 120 can allocate greater portions of cache content for content associated with a content provider that is characterized as popular to facilitate increase delivery of such content. At (4), the video packaging and origination service 120 collects the encoded information from the index and causes individual caching stores to be updated. In some embodiments, the video packaging and origination service 120 can modify traditional caching mechanisms that would either not add content to cache components without first receiving a request or that would otherwise associate a time to live the cached content.

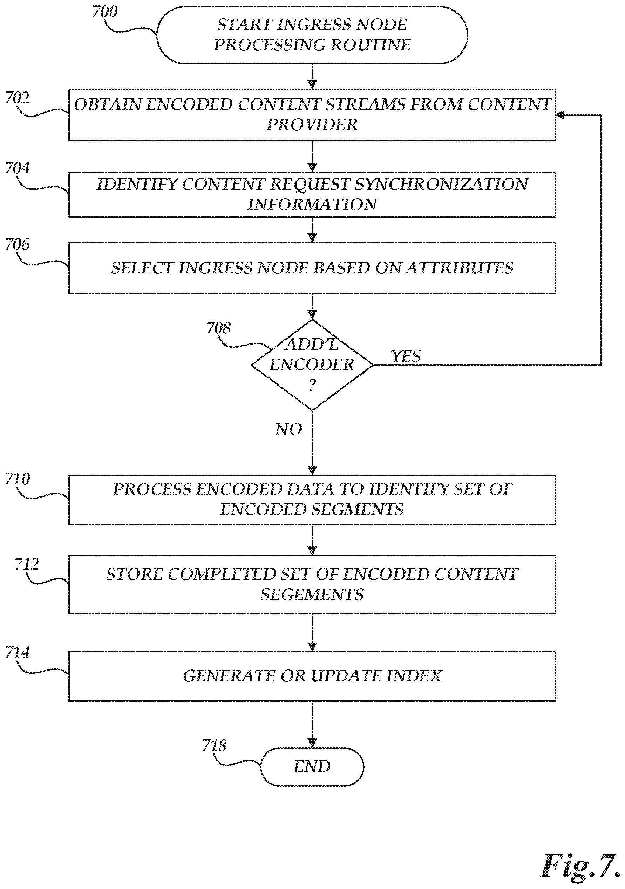

Turning now to FIG. 7, a routine 700 utilized by the video packaging and origination service 120 to receive and process encoder streams will be described. Routine 700 may be illustratively implemented by the video packaging and origination service 120, including one or more an ingress components 122. Illustratively, routine 700 will begin once the original content provider 130 begins transmitting a plurality of encoded content streams to the video packaging and origination service 120 and incorporating received/accessed synchronization information. As described above, the synchronization information may be utilized by the original content provider 130 and video packaging and origination service 120 to transmit and receive encoded content from multiple encoders. If a single encoder is utilized by the original content provider 130, the synchronization information may be omitted. In some embodiments, the original content provider 130 may be configured to transmit different content streams corresponding to a common encoded segment or set of segments encoded according to different encoding profiles. In other embodiments, the original content provider 130 can be configured to transmit redundant content streams to the video packaging and origination service 120.

At block 702, the video packaging and origination service 120 obtains content stream data from an original content provider. As described above, the content stream data may be transmitted by the original content provider 130 responsive to a request from a user device 102, a request from the video packaging and origination service 120, or other request/trigger. At block 704, the video packaging and origination service 120 can optionally transmit synchronization information to the original content provider 130. Illustratively, the synchronization information is utilized by multiple encoders 132 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 120 to assemble the set of ordered segments, remove duplicates and identifying missing encoded segments. In embodiments in which the video packaging and origination service 120 does not transmit synchronization information, such as if the original content provider 130 or other service provides the synchronization information, block 704 may be omitted.

At block 706, the content management system instantiates an ingress component 122 or causes an instantiated ingress component 122 to receive and process the encoded segments from a first received stream. In selecting the ingress component 122, the content management service 126, such as via an ingress microservice, selects an ingress node or component 122 based on attributes of the original content provider 130, the video packaging and origination service 120 or a combination. Such attributes may include geographic information, network location or traffic information, user configurations, general service levels, resource load information, and the like. For example, the video packaging and origination service 120 can identify a computing device that will function as the ingress component 122 and that is located in a region or availability zone that is determined to be proximate to the original content provider 130. In another example, the video packaging and origination service 120 can identify a computing device that will function as ingress component 122 and that is associated with sufficient processing resources as anticipated to receive and process incoming content segments. In still another example, the video packaging and origination service 120 can identify a computing device that will function as the ingress component 122 based on the correlation of the target computing device to specific types of content, content providers, or requesting entities. In a further example, the video packaging and origination service 120 can utilize financial information, such as pricing plans or an attributed cost per transmission, specified by the original content provider 130 or the requesting entities to select an ingress component 122.

Illustratively, the ingress component 122 of the video packaging and origination service 120 processes the received encoded segments to generate deterministic data. Illustratively, the deterministic data can include timestamp information related to a time of play of the set of encoded segments, sequence number identifying an order of the encoded content segment in the set of encoded segments, a time of operation of the encoder and the like. The deterministic data will be illustratively utilized to identify a same content segment or matching content segments that have been encoded according to different encoding profiles and received at different ingress components. For example, four content segments sharing a common timestamp of play but encoded according to the different encoding profiles can be considered to be the same content segment.

At decision block 708, a determination is made as to whether additional encoder segments streams still need to be received. As described above, the video packaging and origination service 120 performs a determination if encoded segments determined to be matching correspond to all the anticipated encoded profiles. For example, to enable variable bitrate encoding, requesting entities may be offered encoded content segments according to five different encoding profiles. Accordingly, the video packaging and origination service 120 could determine via the deterministic information whether there are five matching segments covering the five requested encoding profiles. If additional encoded segments remain unreceived or not fully processed, the routine 700 returns to block 702 to receive the additional encoder streams. If not, the routine 700 proceeds to block 710.

At block 710, the ingress component 122 processes the received encoded segments. For example, the video packaging and origination service 120 can be adjustments or error correction for any of the selected encoded segments. In other embodiment, if the synchronization information does not ensure perfectly compatible encoded segments, the video packaging and origination service 120 can extrapolate additional segments or portions to facilitate combination. In another embodiment, the processed encoded segments can include the generation or translation of the encoded content to correspond to different encoding profiles, such as different combinations of encoding bitrate and format.

At block 712, the ingress component 122 stores the encoded data stream. Illustratively, the ingress component 122 may store all received encoded content regardless of whether it is duplicative or alternative to what will be used by the video packaging and origination service 120. At block 714, the ingress component 122 causes the generation or updating of an index identifying the location of the received encoded content. As will be described below, the index will be utilized by a separate egress component 124 or local cache components 129 to respond to content requests from requesting entities. Illustratively, the index may be made up of one or more files that include relevant identifiers utilized by the video packaging and origination service 120 to identify the storage location of the received and processed encoded components. In some embodiments, the index files may be serialized in a manner to facilitate transmission of the index to other computing devices or storage of the index for access by the additional components of the video packaging and origination service 120.

In some embodiments, the video packaging and origination service 120 can continue to update the index on a periodic basis. For example, if one or more encoded segments are determined to have an error, the video packaging and origination service 120 can receive a different version of the encoded segment from the original content provider 130 or otherwise identify a redundant version of the encoded segment and update the index accordingly. Similarly, if a specific ingress component 122 may be considered offline or unable to process requests or the storage location associated with stored encoded segments blocks becomes unavailable or beyond capacity to service additional information, the video packaging and origination service 120 can select additional or redundant versions of the encoded segment that have been processed and update the index accordingly. At block 716, routine 700 terminates or starts a new iteration of routine 700.

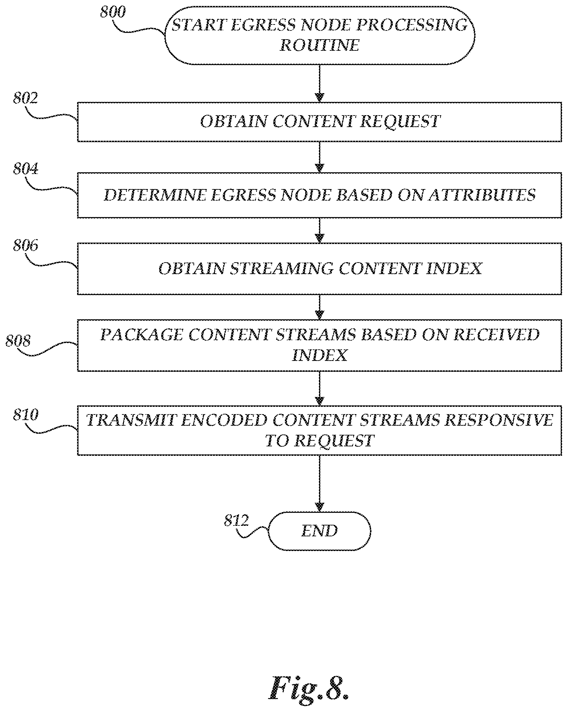

Turning now to FIG. 8, a routine 800 utilized by the video packaging and origination service 120 to select an egress component 124 and process requests for content will be described. At block 802, the video packaging and origination service 120 receives content requests from a requesting entity. Illustratively, the user device directly or through CDN 110 transmits a request for encoded content to the video packaging and origination service 120. The interaction between the requesting entities and the video packaging and origination service 120 can include multiple interactions to identify available content and receive request for content. For example, a user device 102 may generate various user interfaces or software applications that facilitate the selection of content that are directed to the video packaging and origination service 120. As illustrated in FIG. 6B, the content requests from user devices 102 may be transmitted via a CDN 110 or alternatively be transmitted directly from user devices 102 to the video packaging and origination service 120.

Illustratively, the video packaging and origination service 120 receives one or more requests for encoded content streams from requesting entities. To begin processing the content requests, at block 804 the content management service 126 selects an egress node or component 124 based on attributes of the requesting entity (user 102 or POP 110), the video packaging and origination service 120 or a combination. Such attributes may include geographic information, network information, user configurations, general service levels, and the like. For example, the video packaging and origination service 120 can identify a computing device that will function as the egress component 124 and that is located in a region or availability zone that is determined to be proximate to the requesting entity. In another example, the video packaging and origination service 120 can identify a computing device that will function as egress component 124 and that is associated with a communication latency that meets a service level agreement threshold or that is specified by a user. In a further example, the video packaging and origination service 120 can utilize financial information, such as pricing plans or an attributed cost per transmission, specified by the requesting entities or original content provider 130 to select an egress component 122. In such an example, the egress component 124 may be selected based on levels of performance and costs attributed to the performance. Illustratively, the video packaging and origination service 120 can utilize the same criteria (or different criteria) as the criteria utilized to identify the ingress component 122 (FIG. 6A), but the evaluation of the criteria may yield identification of the different computing devices based on consideration of the differences in attributes between a content source 130 and the requesting entities.

At block 806, the content management system instantiates or causes an instantiated egress component 124 to identify and process the index of the encoded segment requests from a first received stream. Illustratively, the egress component 124 of the video packaging and origination service 120 processes the received index to identify the storage location of the encoded segments previously processed and stored by the ingress components 122. As described above, in some embodiments, the identification and processing of the index is completed substantially contemporaneously with the processing of the content request. Accordingly, the generation of the encoded content segments package that form the content stream is dynamic and can be adjusted by the video packaging and origination service 120. As described above, the dynamic packaging of encoded content segments mitigates the need to store all the packages for each egress component locally until requested and for the management of the content segments identified in the index.

At block 808, the egress component 124 compiles or packages the encoded content to be provided based on the identified storage location of the encoded data stream. As described above, the generation of the packages are illustratively completed substantially in real time and responsive to the request for the content, which facilitates the management of the encoded content. At block 810, the egress component 124 causes the transmission of the content responsive to the content request. One skilled in the relevant art will appreciate that the transmission of content segments to requesting entities can include a number of interactions and considerate of the specific protocols implemented to stream content. Routine 800 terminates at block 812 or initiates a new iteration of routine 800.

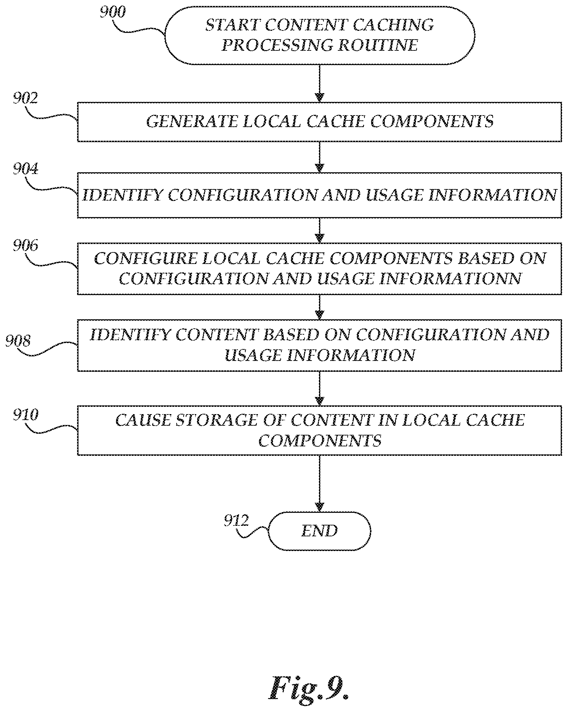

Turning now to FIG. 9, a routine 900 utilized by one or more local cache components 129 in the video packaging and origination service 120 will be described. At block 902, the content management service 126 (or other service) selects and generates local cache components 129 based on attributes of the requesting entity (user 102 or POP 110), the video packaging and origination service 120 or a combination. Such attributes may include geographic information, logical network information, user configurations, general service levels, and the like. For example, the video packaging and origination service 120 may utilize latency measurements for content streams to determine the number of local cache components 129 that may be required.

Illustratively, the video packaging and origination service 120 can maintain a cache component 129 in identified regions or availability zones to facilitate the delivery of content. In one embodiment, the local cache components 129 can correspond to a one-to-one relationship with a geographic zone or logical network zone. In another embodiment, the local cache components 129 can correspond to a one-to-many relationship with multiple geographic zones or logical network zones. Additionally, the local cache components may be instantiated by the video packaging and origination service 120 in a manner that facilitates that management of the cache components. As will be described in greater detail, one or more aspects of individual local cache components can be optimized based on configuration and usage information.

At block 904, the video packaging and origination service 120 obtains usage and configuration information regarding content delivery. The usage and configuration information may include historical information regarding previous requesting entity requests associated with the original content provider 130, similar subject matter or subject matter characterizations, user specified-information, such as request metrics, preferences, ratings, descriptions, and the like. At block 906 the video packaging and origination service 120 configures the individual properties of the cache component 129 based on at least a portion of the usage and configuration information. In one embodiment, the video packaging and origination service 120 can allocate different amounts of the cache data storage based on a characterization of the content streams, such as a characterization of quality, popularity, importance, and the like. For example, the video packaging and origination service 120 can identify content that has been characterized as heavily in demand based on historical information indicative request load. In such an example, the video packaging and origination service 120 can configure a threshold amount of memory of one or more local cache components 129 to maintain content associated with the characterization of quality, popularity, importance, etc. In another example, the video packaging and origination service 120 can adjust timing information associated with cached content, such as a time to live, for content matching the characterization of quality, popularity, important, etc. Illustratively, the usage and configuration information may correspond to individual geographic zones such that multiple local cache components 129 may be associated with different usage and configuration information. In other embodiments, the video packaging and origination service 120 may group different combinations of usage and configuration information to include all geographic zones or sub-combinations of geographic zones.

At block 908, the video packaging and origination service 120 identifies cache content based on usage and configuration information. For example, the video packaging and origination service 120 can identify content that should be included in the cache data storage based on a characterization of the content streams, such as a characterization of quality, popularity, importance, and the like. As described above, the usage and configuration information may include information from the content provider 130, similar subject matter, user information, and the like. For example, the video packaging and origination service 120 can allocate greater portions of cache content for content associated with identified original content providers 130 that have been characterized as generating popular content or that have otherwise contractually specified to have content caching. In another example, the video packaging and origination service 120 can utilize relationships between content streams, such as serial content (e.g., television programming) or movie serials to determine the content streams that will be cached. In still a further example, the video packaging and origination service 120 can receive inputs from the original content provider 130, the ingress components 122, or egress components 124 that include mechanisms for identification of content to be cached.

At block 910, the video packaging and origination service 120 collects the encoded information from the index and causes individual caching stores to be updated. In some embodiments, the video packaging and origination service 120 can modify traditional caching mechanisms that would either not add content to cache components without first receiving a request or that would otherwise associate a time to live the cached content. Routine 900 terminates at block 912 or starts a new iteration of routine 900.

Generally described, content providers can provide content to requesting users. With regard to video content, a content provider can implement a video packaging and origination service that is able to deliver video content to requesting users. Illustratively, a video packaging and origination service indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more.

To deliver content, content providers can organize requested content, such as a video file, into multiple segments that are then transmitted to requesting devices segment by segment. For example, in a video stream, each segment typically accounts for 2-10 seconds of video rendered on a receiving device. To provide content to the video packaging and origination service, individual content segments can be encoded by an encoder and transmitted to the video and origination service. Traditionally, a processing node on the video packaging and origination service can receive an incoming stream of encoded segments and then transmit the stream to requesting user devices. Additionally, each distinct encoded video segment (e.g., combination of bitrate encoding and format) is provided to the video packaging and origination service from a single encoder or encoding node.

Video segments can be encoded according to a defined bitrate and format, which generally defines the number of bits of data that are encoded over a measured amount of time and the specific software algorithm and resulting content representation format utilized to encode the data for transmission. For video files, bitrates are typically measured according to how many kilobits or megabits of data are processed over a second of time. By way of example, a data file that corresponds to 1 megabyte of video data encoded in one second would be considered to have an encoding bitrate of 8 mbps (e.g., 8 megabits per second) while a lower definition video file that corresponds to 45 kilobytes of video data processed in one second would be considered to have an encoding bitrate of 360 kbps (e.g., 360 kilobits per second).

To receive content, a client computing device can simply request content having a fixed encoding rate or have a fixed encoding rate selected in response to a streaming content request. Such a fixed encoding rate approach can be deficient in facilitating variance of the encoding bitrate (both positive and negative) based on factors, such as network bandwidth, client computing device utilization, quality demands, and the like. In addition to the association of the encoding bitrate, video segments can be further defined by associating the encoding bitrate with the encoding format utilized by the encoder to generate the output stream. The encoding format can correspond to a content representation format for storage or transmission of video content (such as in a data file or bitstream). Examples of encoding formats include but not limited to the motion pictures expert group ("MPEG) MPEG-2 Part 2, MPEG-4 Part 2, H.264 (MPEG-4 Part 10), H.265 high efficiency video coding ("HEVC"), Theora, RealVideo RV40, VP9, and AOMedia Video 1 ("AV1"), and the like. Depending on the complexity of the encoding profiles specifying the bitrate and format, a single encoded may be constrained for more complex encoding profiles. This can limit the ability for content providers to provide different encoding bitrate/format combinations or require utilization of increased computing device resources to provide for individual encoding nodes.

To address at least a portion of the inefficiencies described above with regard to single encoder transmission nodes, aspects of the present application corresponding to a multi-encoder node system for transmitting multiple encoder streams. More specifically, aspects of the present application correspond to utilization of synchronization information to allow a video packaging and origination service to receive multiple input streams corresponding to a set of content segments. Each individual stream can be provided by different encoders based on the synchronization information, such as sequence reference numbers or timestamp information. The number of encoders utilized by the content source, such as a content provider, may be based on the complexity of the encoding profile (e.g., encoded bitrate and format), available encoder computing resources, available network bandwidth, financial cost information, processing cost information and the like.

Using the synchronization information, the video packaging and origination service can generate the set of encoded content by processing the multiple encoder streams and selecting encoded segments from different encoders. The video packaging and origination service can select from duplicate encoding streams based on time received, quality measurements, priority designations, attributable cost, or other selection criteria. Additionally, in the event of a failure of one of the encoders, the video packaging and origination service can request additional encoders to complete the transmission or begin collecting additional encoded segments from other encoders.

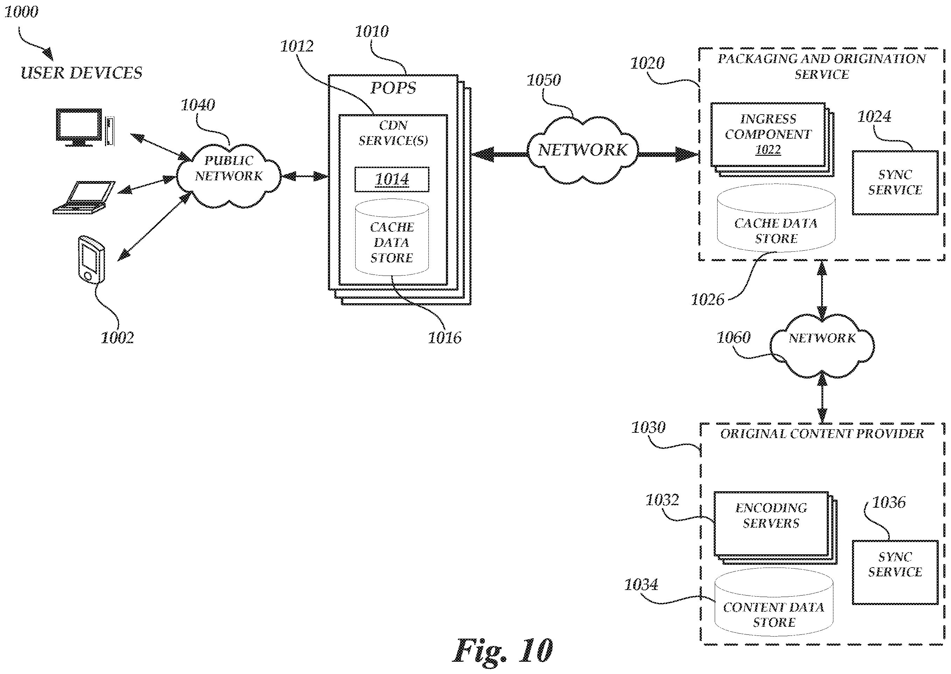

FIG. 10 illustrates a general content delivery environment 1000 for delivering content from original content providers to user devices. The content delivery environment 100 includes a plurality of devices 1002 utilized by individual users, generally referred to as client computing devices, to request streaming or download content from a video packaging and origination service 1020. Illustratively, the video packaging and origination service 1020 indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more. The content can be illustratively provided by one or more origin sources, such as original content provider 1030.

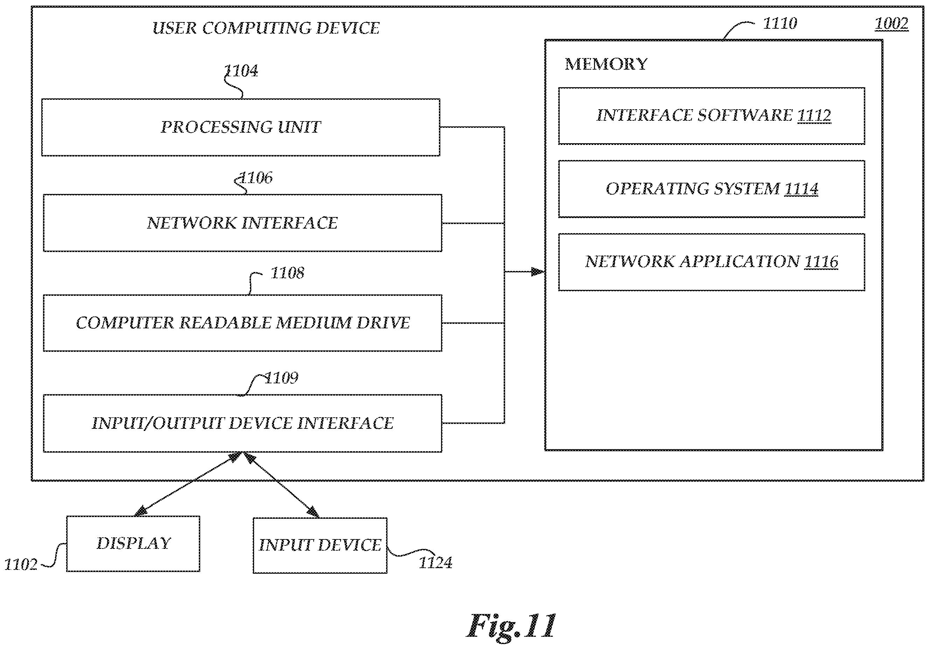

Client computing devices 1002 may include any number of different computing devices capable of communicating with the networks 1040, 1050, 1060, via a direct connection or via an intermediary. For example, individual accessing computing devices may correspond to a laptop or tablet computer, personal computer, wearable computer, server, personal digital assistant (PDA), hybrid PDA/mobile phone, mobile phone, electronic book reader, set-top box, camera, appliance (e.g., a thermostat or refrigerator), controller, watch, eyewear, a home or car device, Internet of Things ("IoT") devices, virtual reality or augmented reality devices, digital media player, and the like. Each client computing device 1002 may optionally include one or more data stores (not shown in FIG. 1) including various applications or computer-executable instructions, such as web browsers, used to implement the embodiments disclosed herein. Illustrative components of a client computing device 1002 will be described with regard to FIG. 11.

In some embodiments, a CDN service provider 1010 may include multiple edge locations from which a user device can retrieve content. Individual edge location 1012 may be referred to herein as a point of presence ("POP"), where a POP is intended to refer to any collection of related computing devices utilized to implement functionality on behalf of one or many providers. POPs are generally associated with a specific geographic location in which the computing devices implementing the POP are located, or with a region serviced by the POP. As illustrated in FIG 1, the POP 1010can include one or more metric information processing component 1014 for processing metric information provided by client computing devices 1002 and a data store 1016 for maintain collected metric information. For example, a data center or a collection of computing devices within a data center may form a POP. In some instances, the POPs may implement one or more services, such as CDN services, data storage services, data processing services, etc. The CDN service provider 1010 may include multiple POPs located in different geographic locations so that user devices can communicate with a nearby a POP to retrieve content, thereby reducing the latency of delivering requested content.

Networks 1040, 1050, 1060 may be any wired network, wireless network, or combination thereof. In addition, the networks 1040, 1050, 1060 may be a personal area network, local area network, wide area network, cable network, fiber network, satellite network, cellular telephone network, data network, or combination thereof. In the example environment of FIG. 1, network 1040 is a global area network (GAN), such as the Internet. Protocols and components for communicating via the other aforementioned types of communication networks are well known to those skilled in the art of computer communications and thus, need not be described in more detail herein. While each of the client computing devices 1002 and video packaging and origination service 1010 are depicted as having a single connection to the network 1040, individual components of the client computing devices 1002 and video packaging and origination service 1010 may be connected to the network 1030 at disparate points. Accordingly, communication times and capabilities may vary between the components of FIG. 10. Likewise, although FIG. 10 is illustrated as having three separate networks 1040, 1050, 1060, one skilled in the relevant art will appreciate that the video packaging and origination service 1010 may utilize any number or combination of networks.

In accordance with embodiments, the video packaging and origination service 1020 includes one or more servers for receiving content from original content providers 1030 and processing the content to make available a set of received encoded bitrate segments. As described in further detail below, the video packaging and origination service 1020 includes an ingress component 1022 utilized to receive encoded data streams from multiple encoding servers 1032 from original content providers 1030. The video packaging and origination service 1020 can further include synchronization services 1024 for generating synchronization information utilized by the encoders, such as sequence numbers corresponding to the set of encoded segments, time stamp information related to a relative time of the encoded segments or from which relative time of encoded segments will be based, and the like. The video packaging and origination service 1020 can further include a data store 1026 for maintaining received encoded data for transmission.

It will be appreciated by those skilled in the art that the video packaging and origination service 1020 may have fewer or greater components than are illustrated in FIG. 1. Thus, the depiction of the video packaging and origination service 1020 in FIG. 1 should be taken as illustrative. For example, in some embodiments, components of the video packaging and origination service 1020 may be executed by one more virtual machines implemented in a hosted computing environment. A hosted computing environment may include one or more rapidly provisioned and released computing resources, which computing resources may include computing, networking or storage devices. In another example, the video packaging and origination service 1020 can include one or more egress components that can utilize the content received and processed from the ingress component 1022 and further process the content for transmission to user devices 1002. Such egress components may be implemented in conjunction with the ingress component 1022, such as in a transcoding node. In other embodiments, the egress components may be implemented and managed independently of the ingress components 1022, such as in separate stand-alone computing devices.

With continued reference to FIG. 10, the content delivery environment 100 also includes original content providers 1030. Illustratively, the original content provider can include a plurality of encoders 1032 for generating multiple encoded streams for transmission to the video packaging and origination service 1020. The original content provider 1030 can also include logic or other management components for determining how many encoders 1032 should be utilized or how to manage the addition or removal of encoders. In some embodiments, the original content provider the original content provider 1030 can further include synchronization services 1036 for generating synchronization information utilized by the encoders, such as sequence numbers corresponding to the set of encoded segments, time stamp information related to a relative time of the encoded segments or from which relative time of encoded segments will be based, and the like. The video packaging and origination service 1020 can further include a data store 1034 for maintaining encoded data for transmission. The synchronization services 1024 and 1036 may work in conjunction or in a complimentary basis.

FIG. 11 depicts one embodiment of an architecture of an illustrative user computing device 1002 that can generate content requests and process metric information in accordance with the present application. The general architecture of the user computing device 1002 depicted in FIG. 11 includes an arrangement of computer hardware and software components that may be used to implement aspects of the present disclosure. As illustrated, the user computing device 104 includes a processing unit 1104, a network interface 1106, an input/output device interface 1109, an optional display 1102, and an input device 1124, all of which may communicate with one another by way of a communication bus.

The network interface 1106 may provide connectivity to one or more networks or computing systems, such as the network 1040 of FIG. 1 and the video packaging and origination service 1020 or the original content provider 1030. The processing unit 1104 may thus receive information and instructions from other computing systems or services via a network. The processing unit 1104 may also communicate to and from memory 1110 and further provide output information for an optional display 1102 via the input/output device interface 1109. The input/output device interface 1109 may also accept input from the optional input device 1124, such as a keyboard, mouse, digital pen, etc. In some embodiments, the user computing device 1002 may include more (or fewer) components than those shown in FIG. 11.

The memory 1110 may include computer program instructions that the processing unit 1104 executes in order to implement one or more embodiments. The memory 1110 generally includes RAM, ROM, or other persistent or non-transitory memory. The memory 1110 may store an operating system 214 that provides computer program instructions for use by the processing unit 1104 in the general administration and operation of the user computing device 1002. The memory 1110 may further include computer program instructions and other information for implementing aspects of the present disclosure. For example, in one embodiment, the memory 1110 includes a network application 1116, such as browser application or media player, for accessing content and communicating with the video packaging and origination service 1020.

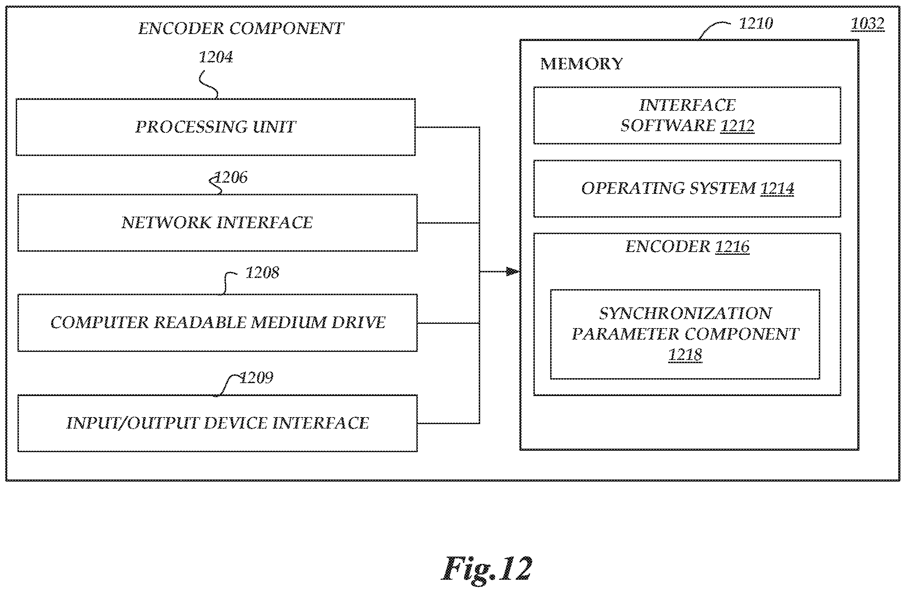

FIG. 12 depicts one embodiment of an architecture of an illustrative server for encoding content as described herein. The general architecture of the encoder 1032 depicted in FIG. 12 includes an arrangement of computer hardware and software components that may be used to implement aspects of the present disclosure. As illustrated, the encoder 1032 includes a processing unit 1204, a network interface 1206, a computer readable medium drive 1208, an input/output device interface 1209, all of which may communicate with one another by way of a communication bus. The components of the encoder 1032 may be physical hardware components or implemented in a virtualized environment.

The network interface 1206 may provide connectivity to one or more networks or computing systems, such as the network 1050 or network 1060 of FIG. 10. The processing unit 1204 may thus receive information and instructions from other computing systems or services via a network. The processing unit 1204 may also communicate to and from memory 1210 and further provide output information for an optional display via the input/output device interface 1209. In some embodiments, the encoder 1032 may include more (or fewer) components than those shown in FIG. 12.

The memory 1210 may include computer program instructions that the processing unit 1204 executes in order to implement one or more embodiments. The memory 1210 generally includes RAM, ROM, or other persistent or non-transitory memory. The memory 1210 may store an operating system 1214 that provides computer program instructions for use by the processing unit 1204 in the general administration and operation of the video packaging and origination service 1020. The memory 1210 may further include computer program instructions and other information for implementing aspects of the present disclosure. For example, in one embodiment, the memory 1210 includes interface software 1212 for receiving and processing content requests from the encoder 1032. As will be described in detail below, the resulting information can include a dynamically configured bundle to encoding bitrates. Additionally, the memory 1210 includes an encoder component 1216 for processing content segments. Additionally, the encoder component 1216 can further include a synchronization parameter component 1218 for utilizing the synchronization information in the encoding process to increase the likelihood that encoded segments from multiple encoders can be utilized by a video packaging and origination service 1020.

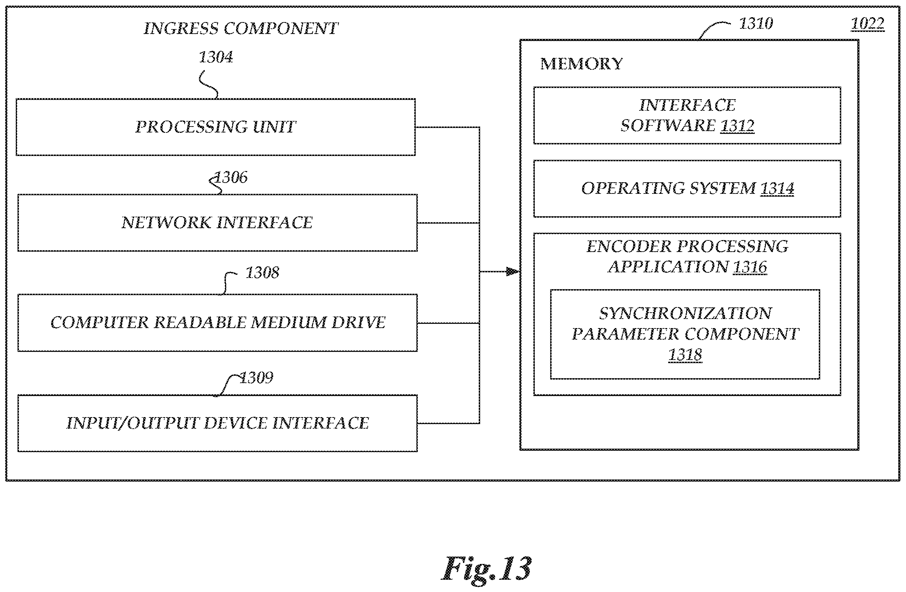

FIG. 13 depicts one embodiment of an architecture of an illustrative server for functioning as an ingress component 1022 as described herein. The general architecture of the ingress component 1022 depicted in FIG. 13 includes an arrangement of computer hardware and software components that may be used to implement aspects of the present disclosure. As illustrated, the ingress component 1022 includes a processing unit 1304, a network interface 1306, a computer readable medium drive 1308, an input/output device interface 409, all of which may communicate with one another by way of a communication bus. The components of the ingress component 1022 may be physical hardware components or implemented in a virtualized environment.

The network interface 1306 may provide connectivity to one or more networks or computing systems, such as the network 1050 or network 1060 of FIG. 10. The processing unit 1304 may thus receive information and instructions from other computing systems or services via a network. The processing unit 1304 may also communicate to and from memory 1310 and further provide output information for an optional display via the input/output device interface 409. In some embodiments, the ingress component 1022 may include more (or fewer) components than those shown in FIG. 13.

The memory 1310 may include computer program instructions that the processing unit 1304 executes in order to implement one or more embodiments. The memory 1310 generally includes RAM, ROM, or other persistent or non-transitory memory. The memory 1310 may store an operating system 1314 that provides computer program instructions for use by the processing unit 1304 in the general administration and operation of the ingress node. The memory 1310 may further include computer program instructions and other information for implementing aspects of the present disclosure. For example, in one embodiment, the memory 1310 includes interface software 1312 for receiving and processing content requests from the ingress component 1022. As will be described in detail below, the resulting information can include a dynamically configured bundle to encoding bitrates. Additionally, the memory 1310 includes an encoder processing application 1316 for processing incoming encoded content segments. Additionally, the ingress component 1022 can further include a synchronization parameter component 1318 for utilizing the synchronization information in the encoding process to increase the likelihood that encoded segments from multiple encoders can be utilized by the ingress component 1022.

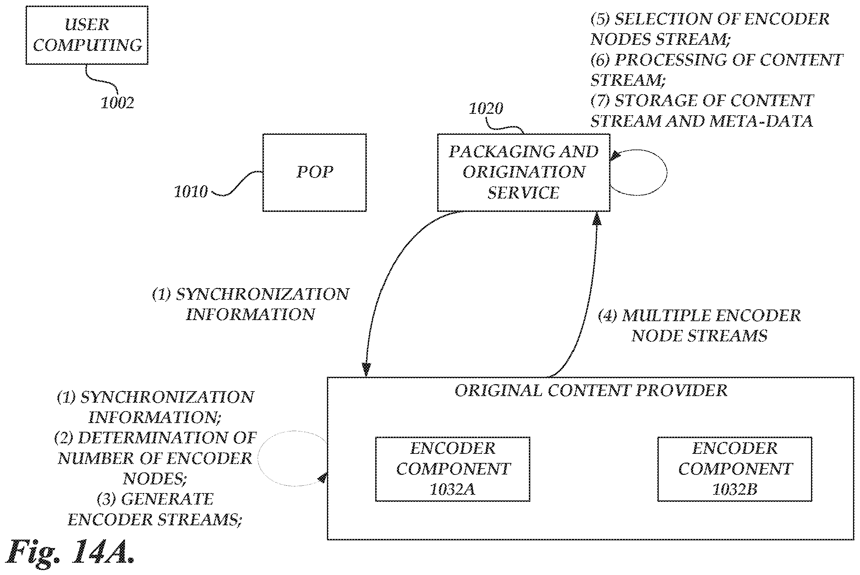

At (1), the video packaging and origination service 1020 can transmit synchronization information to the original content provider 1030. Illustratively, the synchronization information is utilized by multiple encoders 1032 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 1020 to assemble the set of ordered segments, remove duplicates and identifying missing encoded segments. Although FIG. 14A illustrates the transmission of the synchronization information from the video packaging and origination service 1020, in some embodiments, synchronization information may not be transmitted by the video packaging and origination service 1020 and this interaction would be omitted altogether.

At (2), the receiving original content provider 1030 determines the number of encoders that will be utilized to generate the requested encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, preferences or service levels associated with the video packaging and origination service 1020, network conditions (e.g., available bandwidth, network throughput, error rates), demand from users devices (e.g., total number of requests or frequencies of requests), and the like.

Illustratively, the content stream data may be transmitted by the original content provider 1030 responsive to a request from a user device 1002, a request from the video packaging and origination service 1020, or other request/trigger. Illustratively, the encoded content can correspond to a set of encoded profiles corresponding to the encoding bitrate and format combinations that may be made available to users. For example, the video packaging and origination service 1020 may provide a requesting user device 1002 with a set of encoding bitrate and format combinations in order to support adaptive bitrate streaming. Accordingly, the request from the original content provider may transmit the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At (3), the original content provider causes the selected number of encoders to generate encoded streams based on synchronization information. As described above, the video packaging and origination service 1020 may provide the synchronization information. In another embodiment, the original content provider 1030 can utilize self-providing synchronization, information provided by a third-party service or a combination. At (4), the original content provider begins transmitting a plurality of encoded content streams to the video packaging and origination service 1020 and incorporating received/accessed synchronization information. In some embodiments, the encoders 1032B and 1032A are configured to transmit non-overlapping segments in which the encoding task for the set of segments it distributed among encoders. In other embodiments, the encoders are configured to at least partially transmit overlapping or redundant encoded segments.

The video packaging and origination service 1020 receives the plurality of incoming encoded content streams from the encoders. At (5), the video packaging and origination service 1020 selects encoded segments from the received streams. Illustratively, if the encoded content streams are non-overlapping, the video packaging and origination service 1020 does not have to check for redundancies or other selection criteria (e.g., time received or reputation of encoders). If the encoded content streams may have overlapping segments, the video packaging and origination service 1020 checks for redundancies or other utilizes selection criteria to determine which of the redundant encoded content segments will be utilized.

At (6), the video packaging and origination service 1020 processes the received encoded segments. For example, the video packaging and origination service 1020 can be adjustments or error correction for any of the selected encoded segments. In other embodiment, if the synchronization information does not ensure perfectly compatible encoded segments, the video packaging and origination service 1020 can extrapolate additional segments or portions to facilitate combination. Still further, in some embodiments, the ingress component 1022 of the video packaging and origination service 1020 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 1022 or content management service 1026 can conduct quality or error checking that can be included in meta-data. At (7) the video packaging and origination service 1020 stores the cumulative set of encoded segments for delivery to user devices 1002 along with any meta-data generated as part of the processing.

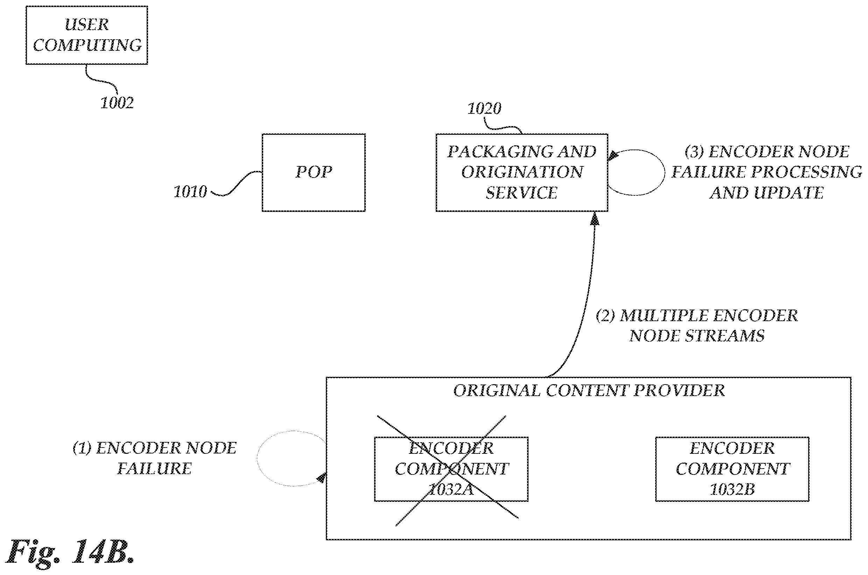

Turning now to FIG. 14B, a fail over scenario will be described. The interactions illustrated in FIG. 14B are based interaction after the initial transmission of multiple encoded segment transmission has begun. At (1), the original content provider 1030 experiences an encoder failure, generally illustrated as a failure to encoded component 1032A. At (2), the original content provider continues transmitting a plurality of encoded content streams to the video packaging and origination service 1020 and incorporating received/accessed synchronization information. In some embodiments, if the encoders 1032B and 1032A were previously configured to transmit non-overlapping segments in which the encoding task for the set of segments it distributed among encoders, the original content provider (via request or a priori) will be required to update the configuration of the remaining encoders 1032 or to otherwise cause the initiation of additional encoders. In other embodiments, the encoders may be configured will at least partially overlapping encoded segments. In this embodiment, the original content provider may not choose to make any changes to the configurations.

At (3), the video packaging and origination service 1020 receives the adjusted encoder node streams and processing the determine failover. Illustratively, the ingress component 1022 may have specific rules regarding failover, such as switching to a default encoder node or set of nodes. In other embodiments, the video packaging and origination service 1020 can request additional or alternative encoder nodes. Additionally, the video packaging and origination service 1020 can scan for already received encoded nodes received from the encoder prior to failure and ensure that no additional errors were introduced prior to the determined failure.

Turning now to FIG. 6, a routine 1500 utilized by the video packaging and origination service 1020 to receive and process multiple encoder streams will be described. Routine 1500 may be illustratively implemented by an ingress component 1022.

At block 1502, the video packaging and origination service 1020 can optionally transmit synchronization information to the original content provider 1030. Illustratively, the synchronization information is utilized by multiple encoders 1032 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 1020 to assemble the set of ordered segments, remove duplicates and identifying missing encoded segments. In embodiments in which the video packaging and origination service 1020 does not transmit synchronization information, such as if the original content provider 1030 or other service provides the synchronization information, block 1502 may be omitted.

Responsive to a request or trigger, as described above, the original content provider 1030 begins transmitting a plurality of encoded content streams to the video packaging and origination service 1020 and incorporating received/accessed synchronization information at block 1504. In some embodiments, the encoders 1032B and 1032A may be configured to transmit non-overlapping segments in which the encoding task for the set of segments it distributed among encoders. In other embodiments, the encoders may be configured will at least partially overlapping encoded segments. At block 1504, the video packaging and origination service 1020 receives the plurality of incoming encoded content streams from the encoders. At decision block 606, a determination is made as to whether additional encoder segments streams are received. If so, the routine 1500 returns to block 1504 to receive the additional encoder streams. If not, the routine 1500 proceeds to block 1508.

At block 1508, the video packaging and origination service 1020 processes the received encoded segments. For example, the video packaging and origination service 1020 can be adjustments or error correction for any of the selected encoded segments. In other embodiment, if the synchronization information does not ensure perfectly compatible encoded segments, the video packaging and origination service 1020 can extrapolate additional segments or portions to facilitate combination. Still further, in some embodiments, the ingress component 1022 of the video packaging and origination service 1020 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 1022 or content management service 1026 can conduct quality or error checking that can be included in meta-data. At block 1510, the video packaging and origination service 1020 stores the cumulative set of encoded segments for delivery to user devices 1002. As described above, the video packaging and origination service 1020 can also associate or store meta-data associated with the segments. Routine 1500 terminates at block 1512 or starts a new iteration of routine 1500.

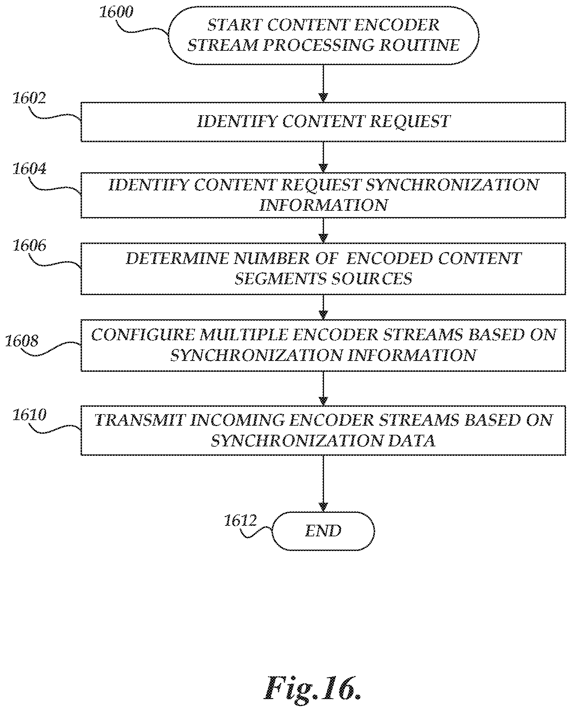

Turning now to FIG. 16, a routine 1600 utilized by to generate multiple encoder streams will be described. Routine 1600 may be illustratively implemented by multiple encoder components 1032. At block 1602, the encoder component 1032 (directly or indirectly) determines that an encoded content should be provided. Illustratively, the encoded content can correspond to a set of encoded profiles corresponding to the encoding bitrate and format combinations that may be made available to users. For example, the video packaging and origination service 1020 may provide a set of encoding bitrate and format combinations in order to support adaptive bitrate streaming. Accordingly, the content that will be delivered to the video packaging and origination service 1020 may correspond to the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At (2), the encoder can receive synchronization information or generate synchronization information. As described above, the synchronization information is utilized by multiple encoders 1032 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 1020 to assemble the set of ordered segments, remove duplicates and identifying missing encoded segments.

At block 1606, the receiving original content provider 1030 determines the number of encoders that will be utilized to generate the requested encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, preferences or service levels associated with the video packaging and origination service 1020, network conditions (e.g., available bandwidth, network throughput, error rates), demand from users devices (e.g., total number of requests or frequencies of requests), and the like.

At block 1608, the original content provider causes the selected number of encoders to generate encoded streams based on synchronization information. As described above, the video packaging and origination service 1020 may provide the synchronization information. In another embodiment, the original content provider 1030 can utilize self-providing synchronization, information provided by a third-party service or a combination. At block 1610, the original content provider begins transmitting a plurality of encoded content streams to the video packaging and origination service 1020 and incorporating received/accessed synchronization information. In some embodiments, the encoders 1032B and 1032A may be configured to transmit non-overlapping segments in which the encoding task for the set of segments it distributed among encoders. In other embodiments, the encoders may be configured will at least partially overlapping encoded segments. Routine 700 terminates at block 712 or starts a new iteration of routine 700.

Generally described, content providers can provide content to requesting users. With regard to video content, a content provider can implement a video packaging and origination service that is able to deliver video content to requesting users. Illustratively, a video packaging and origination service indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more.

To deliver content, content providers can organize requested content, such as a video file, into multiple segments that are then transmitted to requesting devices segment by segment. For example, in a video stream, each segment typically accounts for 2-10 seconds of video rendered on a receiving device. To provide content to the video packaging and origination service, individual content segments can be encoded by an encoder and transmitted to the video and origination service. Traditionally, a single processing node on the video packaging and origination service can receive an incoming stream of encoded segments and then transmit the stream to requesting user devices.

Video segments can be encoded according to a defined bitrate and format, which generally defines the number of bits of data that are encoded over a measured amount of time and the specific software algorithm and resulting content representation format utilized to encode the data for transmission. For video files, bitrates are typically measured according to how many kilobits or megabits of data are processed over a second of time. By way of example, a data file that corresponds to 1 megabyte of video data encoded in one second would be considered to have an encoding bitrate of 8 mbps (e.g., 8 megabits per second) while a lower definition video file that corresponds to 45 kilobytes of video data processed in one second would be considered to have an encoding bitrate of 360 kbps (e.g., 360 kilobits per second).

In some embodiments, it may be possible for the content provider to facilitate variable bit rate encoding to enable for variances in the encoding bitrates of individual segments of a video file. In such embodiments, the content provider can generate multiple encoded bitrate versions or combinations of encoded bitrates and formats of individual video file segments. The content provider can then make at least a subset of the multiple bitrate encoded versions available to clients responsive to a request for a particular encoded bitrate version and format. Generally, a content provider can generate a catalog identifying the video segments and encoded bitrates for each identified video segment. The catalog can be written into a manifest file that is provided to individual client computing devices that have requested the video file. Thereafter, once all the versions of an encoded segment are received by the packaging and origination service, the packaging and origination service is available to receive and process requests for encoded content. More specifically, client computing devices, through a respective software application, can request individual video segments according to the available encoded bitrates and formats as published in the manifest file.

To receive content, a client computing device can simply request content having a fixed encoding rate or have a fixed encoding rate selected in response to a streaming content request. Such a fixed encoding rate approach can be deficient in facilitating variance of the encoding bitrate (both positive and negative) based on factors, such as network bandwidth, client computing device utilization, quality demands, and the like. In addition to the association of the encoding bitrate, video segments can be further defined by associating the encoding bitrate with the encoding format utilized by the encoder to generate the output stream. The encoding format can correspond to a content representation format for storage or transmission of video content (such as in a data file or bitstream). Examples of encoding formats include but not limited to the motion pictures expert group ("MPEG) MPEG-2 Part 2, MPEG-4 Part 2, H.264 (MPEG-4 Part 10), H.265 high efficiency video coding ("HEVC"), Theora, RealVideo RV40, VP9, and AOMedia Video 1 ("AV1"), and the like.

Traditionally, video packaging and origination services can maintain a single ingress node to receive individual content streams or channels corresponding to encoded segments encoded to a specific encoding profile (e.g., encoding bitrate and format). A single ingress node can utilize state information that facilitates determination that all encoding versions of the same encoded segment have been received. However, the throughput of incoming data streams is limited by characteristics of the single ingress node. For example, an ingress node may experience latencies associated with processing more complex encoded content. In such situation, a video packaging and origination service could experience additional inefficiencies by limiting the ability of the video packaging and origination service to process additional encoding channels related to other encoding profiles until the current encoded data is processed.

To address at least a portion of the inefficiencies described above with regard to single ingress nodes, aspects of the present application corresponding to a multi-ingress node system for receiving and processing encoder streams. More specifically, aspects of the present application correspond to utilization of synchronization information to allow a video packaging and origination service to utilize a plurality of ingress nodes that an independently process encoded content segments. Individual content streams can correspond to encoding of a common or same content segment according to a different encoding profile, such as a different combination of encoding bitrate and format. For example, in embodiments supporting variable bit rate encoding, a content provider may be requested to provide different encoded versions of each content segment based on the content profiles (e.g., encoding bitrate and format combination) identified in a content manifest.

Using the synchronization information, individual ingress nodes within the video packaging and origination service process the received encoded segments and generate deterministic data identifying the received encoded segment. Illustratively, the deterministic data can include encoder timestamps, segment sequence numbers, and timing information regarding operation of the encoder. The deterministic data allows the identification of a common encoded segment amongst all the received encoded segments and be stored as meta-data. As individual ingress nodes process incoming data, the video packaging and origination service can utilize the deterministic data/meta-data to identify all common encoded segments and determine whether all the requested encoded versions (e.g., by encoding profile) have been processed. If so, the particular encoded segment is ready for storage or transmission to user devices.

By allowing the utilization of a plurality of ingress nodes, aspects of the present application facilitate parallel process of different incoming content streams without requiring the need for sharing of state data by the plurality of ingress nodes. Each incoming content stream corresponding to a different encoding profile can be processed by a different or the same ingress nodes without a need to determine where a different version of the same content stream has been previously processed. Additionally, in situations in which a particular ingress node experiences some latency, additional content streams can be processed in concurrently to facilitate faster availability of streaming content to users.

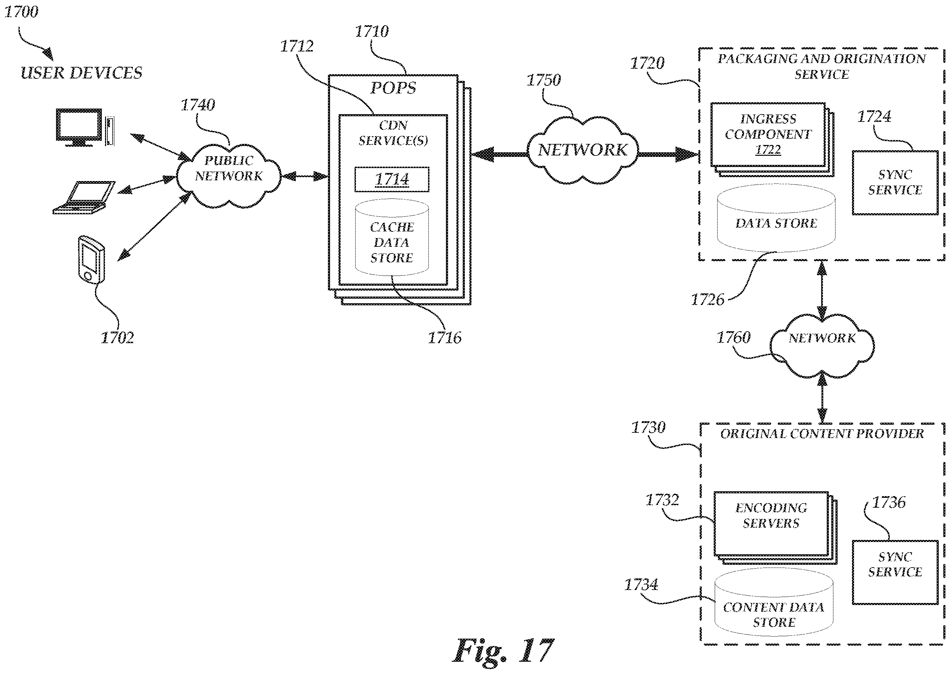

FIG. 17 illustrates a general content delivery environment 1700 for delivering content from original content providers to user devices. The content delivery environment 1700 includes a plurality of devices 1702 utilized by individual users, generally referred to as client computing devices, to request streaming or download content from a video packaging and origination service 1720. Illustratively, the video packaging and origination service 1720 indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more. The content can be illustratively provided by one or more origin sources, such as original content provider 1730.

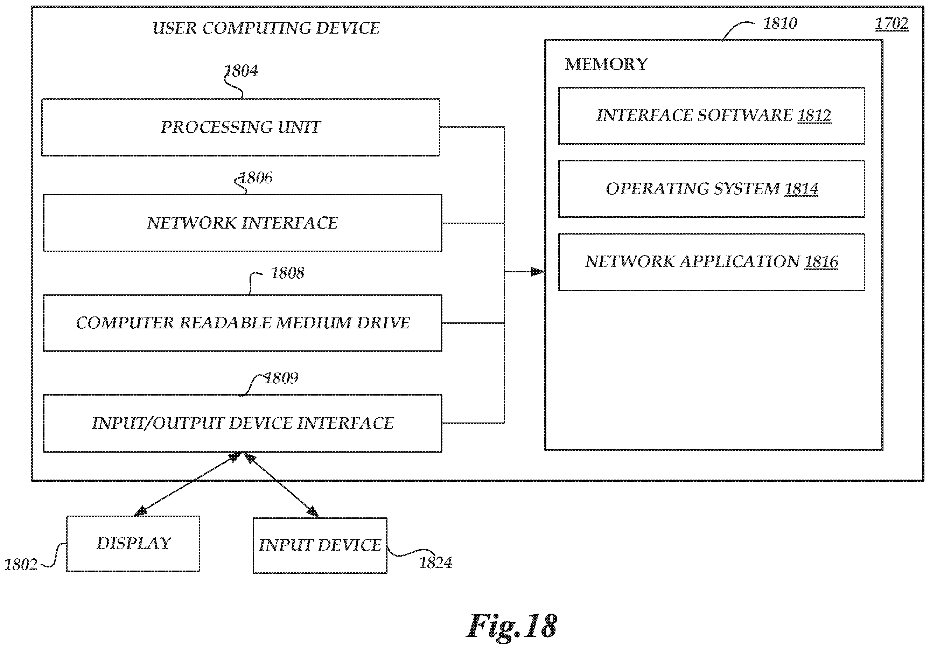

Client computing devices 1702 may include any number of different computing devices capable of communicating with the networks 1740, 1750, 1760, via a direct connection or via an intermediary. For example, individual accessing computing devices may correspond to a laptop or tablet computer, personal computer, wearable computer, server, personal digital assistant (PDA), hybrid PDA/mobile phone, mobile phone, electronic book reader, set-top box, camera, appliance (thermostat or refrigerator), controller, digital media player, watch, eyewear, a home or car device, Internet of Things ("IoT") devices, virtual reality or augmented reality devices, and the like. Each client computing device 1702 may optionally include one or more data stores (not shown in FIG. 17) including various applications or computer-executable instructions, such as web browsers, used to implement the embodiments disclosed herein. Illustrative components of a client computing device 1702 will be described with regard to FIG. 18.

In some embodiments, a CDN service provider may include multiple edge locations from which a user device can retrieve content. Individual edge location 1712 may be referred to herein as a point of presence ("POP"), where a POP is intended to refer to any collection of related computing devices utilized to implement functionality on behalf of one or many providers. POPs are generally associated with a specific geographic location in which the computing devices implementing the POP are located, or with a region serviced by the POP. As illustrated in FIG 1, the POP 1710 can include one or more metric information processing component 114 for processing metric information provided by client computing devices 1702 and a data store 1716 for maintain collected metric information. For example, a data center or a collection of computing devices within a data center may form a POP. In some instances, the POPs may implement one or more services, such as CDN services, data storage services, data processing services, etc. The CDN service provider 1710 may include multiple POPs located in different geographic locations so that user devices can communicate with a nearby a POP to retrieve content, thereby reducing the latency of delivering requested content.

Networks 1740, 1750, 1760 may be any wired network, wireless network, or combination thereof. In addition, the networks 1740, 1750, 1760 may be a personal area network, local area network, wide area network, cable network, fiber network, satellite network, cellular telephone network, data network, or combination thereof. In the example environment of FIG. 17, network 1740 is a global area network (GAN), such as the Internet. Protocols and components for communicating via the other aforementioned types of communication networks are well known to those skilled in the art of computer communications and thus, need not be described in more detail herein. While each of the client computing devices 1702 and video packaging and origination service 1710 are depicted as having a single connection to the network 1740, individual components of the client computing devices 1702 and video packaging and origination service 1710 may be connected to the network 1730 at disparate points. Accordingly, communication times and capabilities may vary between the components of FIG. 17. Likewise, although FIG. 17 is illustrated as having three separate networks 1740, 1750, 1760, one skilled in the relevant art will appreciate that the video packaging and origination service 1710 may utilize any number or combination of networks.

In accordance with embodiments, the video packaging and origination service 1720 includes one or more servers for receiving content from original content providers 1730 and processing the content to make available a set of received encoded bitrate segments. As described in further detail below, the video packaging and origination service 1720 includes a plurality of ingress components 1722 utilized to receive encoded data streams from encoders encoding servers 1732 from the original content providers 1730. As will be explain in greater detail below, the ingress components can generate deterministic data that will facilitate a determination of when a complete set of encoded version of a content segment has been received and is ready for further processing or transmission.

The video packaging and origination service 1720 can further include synchronization services 1724 for generating synchronization information utilized by the encoders, such as sequence numbers corresponding to the set of encoded segments, time stamp information related to a relative time of the encoded segments or from which relative time of encoded segments will be based, and the like. As described above, the synchronization information can be utilized in the generation of deterministic data for purposes of determining when a content request has been fully completed. The video packaging and origination service 1720 can further include a data store 1726 for maintaining received encoded data for transmission.

It will be appreciated by those skilled in the art that the video packaging and origination service 1720 may have fewer or greater components than are illustrated in FIG. 17. Thus, the depiction of the video packaging and origination service 1720 in FIG. 17 should be taken as illustrative. For example, in some embodiments, components of the video packaging and origination service 1720 may be executed by one more virtual machines implemented in a hosted computing environment. A hosted computing environment may include one or more rapidly provisioned and released computing resources, which computing resources may include computing, networking or storage devices. In another example, the video packaging and origination service 1720 can include one or more egress components that can utilize the content received and processed from the ingress component 1722 and further process the content for transmission to user devices 1702. Such egress components may be implemented in conjunction with the ingress component 1722, such as in a transcoding node. In other embodiments, the egress components may be implemented and managed independently of the ingress components 1722, such as in separate stand-alone computing devices.

With continued reference to FIG. 17, the content delivery environment 1700 also includes original content providers 1730. Illustratively, the original content provider can include a plurality of encoders 1732 for generating multiple encoded streams for transmission to the video packaging and origination service 1720. In one embodiment, individual encoders may generate different encode versions of a content segment according to a different encoding profile. The original content provider 1730 can also include logic or other management components for determining how many encoders 1732 should be utilized or how to manage the addition or removal of encoders. In some embodiments, the original content provider the original content provider 1730 can further include synchronization services 136 for generating synchronization information utilized by the encoders, such as sequence numbers corresponding to the set of encoded segments, time stamp information related to a relative time of the encoded segments or from which relative time of encoded segments will be based, and the like. The video packaging and origination service 1720 can further include a data store 1734 for maintaining encoded data for transmission. The synchronization services 1724 and 136 may work in conjunction or in a complimentary basis.

FIG. 18 depicts one embodiment of an architecture of an illustrative user computing device 1702 that can generate content requests and process metric information in accordance with the present application. The general architecture of the user computing device 1702 depicted in FIG. 18 includes an arrangement of computer hardware and software components that may be used to implement aspects of the present disclosure. As illustrated, the user computing device 104 includes a processing unit 1804, a network interface 1806, an input/output device interface 1809, an optional display 202, and an input device 224, all of which may communicate with one another by way of a communication bus.

The network interface 1806 may provide connectivity to one or more networks or computing systems, such as the network 1740 of FIG. 17 and the video packaging and origination service 1720 or the original content providers 1730. The processing unit 1804 may thus receive information and instructions from other computing systems or services via a network. The processing unit 1804 may also communicate to and from memory 1810 and further provide output information for an optional display 202 via the input/output device interface 1809. The input/output device interface 1809 may also accept input from the optional input device 224, such as a keyboard, mouse, digital pen, etc. In some embodiments, the user computing device 1702 may include more (or fewer) components than those shown in FIG. 18.

The memory 1810 may include computer program instructions that the processing unit 1804 executes in order to implement one or more embodiments. The memory 1810 generally includes RAM, ROM, or other persistent or non-transitory memory. The memory 1810 may store an operating system 1812 that provides computer program instructions for use by the processing unit 1804 in the general administration and operation of the user computing device 1702. The memory 1810 may further include computer program instructions and other information for implementing aspects of the present disclosure. For example, in one embodiment, the memory 1810 includes a network application 1816, such as browser application or media player, for accessing content and communicating with the video packaging and origination service 1720.

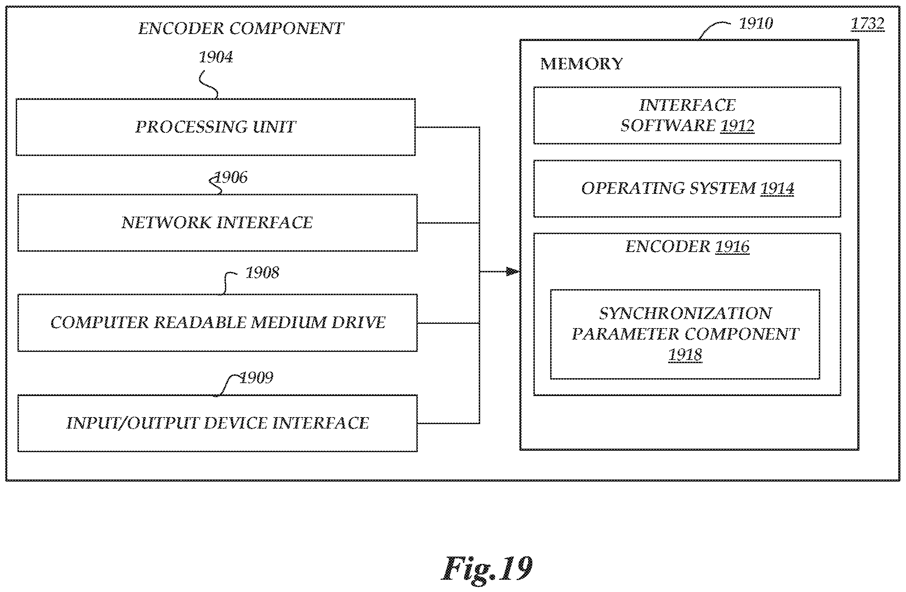

FIG. 19 depicts one embodiment of an architecture of an illustrative server for encoding content as described herein. The general architecture of the encoder 1732 depicted in FIG. 19 includes an arrangement of computer hardware and software components that may be used to implement aspects of the present disclosure. As illustrated, the encoder 1732 includes a processing unit 1904, a network interface 1906, a computer readable medium drive 1908, an input/output device interface 1909, all of which may communicate with one another by way of a communication bus. The components of the encoder 1732 may be physical hardware components or implemented in a virtualized environment.

The network interface 1906 may provide connectivity to one or more networks or computing systems, such as the network 1750 or network 1760 of FIG. 17. The processing unit 1904 may thus receive information and instructions from other computing systems or services via a network. The processing unit 1904 may also communicate to and from memory 1910 and further provide output information for an optional display via the input/output device interface 1909. In some embodiments, the encoder 1732 may include more (or fewer) components than those shown in FIG. 19.

The memory 1910 may include computer program instructions that the processing unit 1904 executes in order to implement one or more embodiments. The memory 1910 generally includes RAM, ROM, or other persistent or non-transitory memory. The memory 1910 may store an operating system 1914 that provides computer program instructions for use by the processing unit 1904 in the general administration and operation of the video packaging and origination service 1720. The memory 1910 may further include computer program instructions and other information for implementing aspects of the present disclosure. For example, in one embodiment, the memory 1910 includes interface software 1912 for receiving and processing content requests from the video packaging and origination services 1702.

Additionally, the memory 1910 includes an encoder component 1916 for processing content segments. Additionally, the encoder component 1916 can further include a synchronization parameter component 1918 for utilizing the synchronization information in the encoding process to increase the likelihood that encoded segments from multiple encoders can be utilized by a video packaging and origination service 1720. The synchronization information can be utilized in the generation of deterministic data as will be described below.

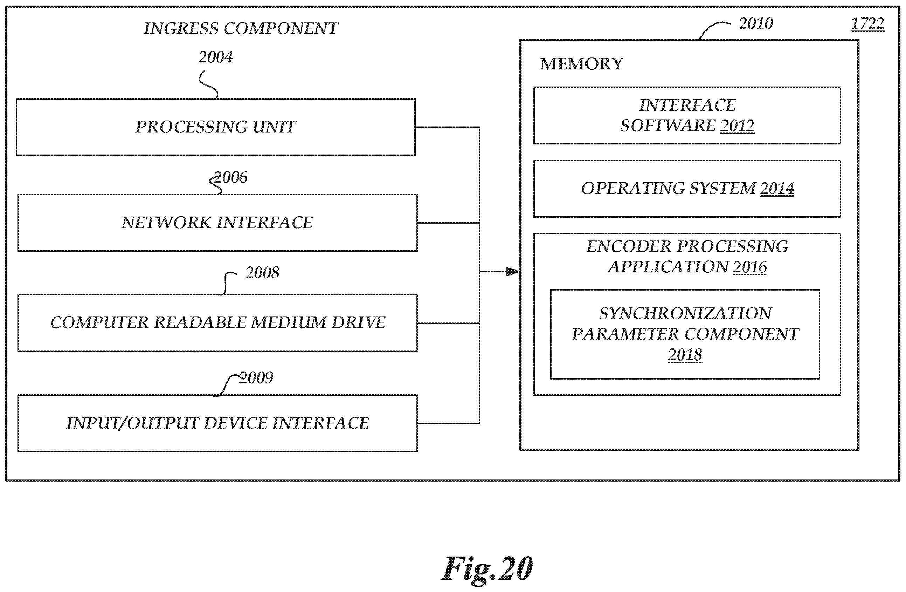

FIG. 20 depicts one embodiment of an architecture of an illustrative server for functioning as an ingress component 1722 as described herein. As described above, the video packaging and origination service 1720 includes multiple ingress components 1722 (or nodes) that facilitate intake of encoded segments that have been encoded according to different encoding profiles. The general architecture of the ingress component 1722 depicted in FIG. 20 includes an arrangement of computer hardware and software components that may be used to implement aspects of the present disclosure. As illustrated, the ingress component 1722 includes a processing unit 2004, a network interface 2006, a computer readable medium drive 2008, an input/output device interface 2009, all of which may communicate with one another by way of a communication bus. The components of the ingress component 1722 may be physical hardware components or implemented in a virtualized environment.

The network interface 2006 may provide connectivity to one or more networks or computing systems, such as the network 1750 or network 1760 of FIG. 17. The processing unit 2004 may thus receive information and instructions from other computing systems or services via a network. The processing unit 2004 may also communicate to and from memory 2010 and further provide output information for an optional display via the input/output device interface 2009. In some embodiments, the ingress component 1722 may include more (or fewer) components than those shown in FIG. 20.

The memory 2010 may include computer program instructions that the processing unit 2004 executes in order to implement one or more embodiments. The memory 2010 generally includes RAM, ROM, or other persistent or non-transitory memory. The memory 2010 may store an operating system 2014 that provides computer program instructions for use by the processing unit 2004 in the general administration and operation of the ingress node. The memory 2010 may further include computer program instructions and other information for implementing aspects of the present disclosure. For example, in one embodiment, the memory 2010 includes interface software 2012 for receiving and processing content from encoders 1732. Additionally, the memory 2010 includes an encoder processing application 416 for processing incoming encoded content segments. Additionally, the ingress component 1722 can further include a synchronization parameter component 2018 for utilizing the synchronization information to generate the deterministic information as described above.

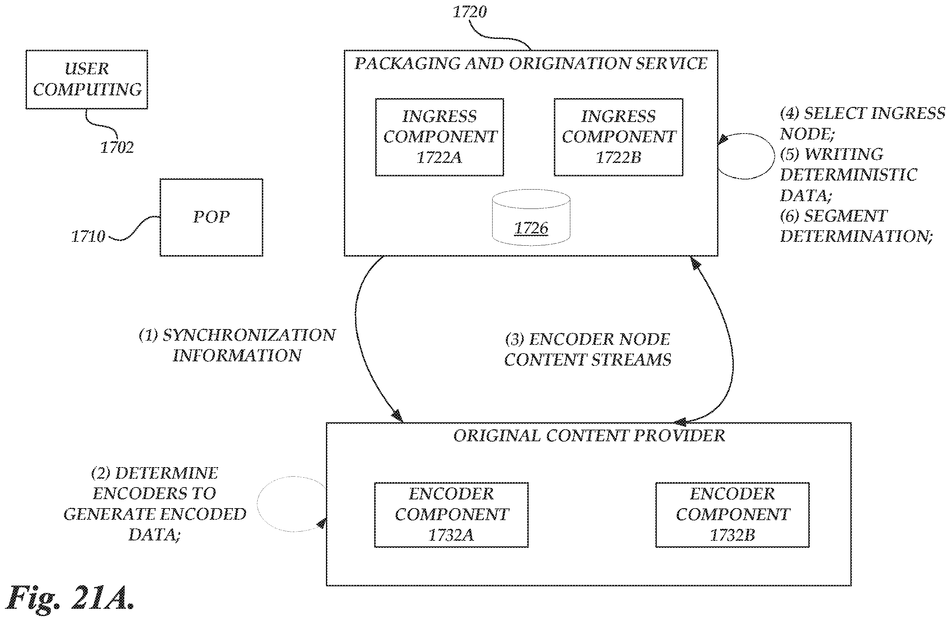

Turning now to FIGS. 5A and 5B, an illustrative interaction for the processing of content requests will be described. [0039] At (1), the video packaging and origination service 1720 can transmit synchronization information to the original content provider 1730. Illustratively, the synchronization information is utilized by multiple encoders 1732 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 1720 to assemble the set of ordered segments, remove duplicates and identifying missing encoded segments. Although FIG. 21A illustrates the transmission of the synchronization information from the video packaging and origination service 1720, in some embodiments, synchronization information may not be transmitted by the video packaging and origination service 1720 and this interaction would be omitted altogether.

Illustratively, the content stream data may be transmitted by the original content provider 1730 responsive to a request from a user device 1702, a request from the video packaging and origination service 1720, or other request/trigger. Illustratively, the encoded content can correspond to a set of encoded profiles corresponding to the encoding bitrate and format combinations that may be made available to users. For example, the video packaging and origination service 1720 may provide a requesting user device 1702 with a set of encoding bitrate and format combinations in order to support adaptive bitrate streaming. Accordingly, the request from the original content provider may transmit the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At (2), the receiving original content provider 1730 determines the number of encoders that will be utilized to generate the requested encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, preferences or service levels associated with the video packaging and origination service 1720, network conditions (e.g., available bandwidth, network throughput, error rates), demand from users devices (e.g., total number of requests or frequencies of requests), and the like. At (3), the original content provider 1730 causes one or more encoders to generate encoded streams based on synchronization information. As described above, the video packaging and origination service 1720 may provide the synchronization information. In another embodiment, the original content provider 1730 can utilize self-providing synchronization, information provided by a third-party service or a combination. Illustratively, the original content provider can provide multiple encoder streams that can correspond to individual content streams corresponding to the different requested encoding profiles. For example, a first content stream can correspond to a first encoding bitrate and format (e.g., a first encoding profile) and a second content stream can correspond to a second encoding bitrate and format that is different. The encoding streams may be provided by different encoders as illustrated in FIG. 21A as encoder components 17321032A and 1732B.

The video packaging and origination service 1720 receives the plurality of incoming encoded content streams from the encoders. More specifically, at (4), a first ingress component is determined. By way of example, , a first ingress component, such as ingress component 1722A, of the video packaging and origination service 1720 receives and processes the encoded segments from a first received stream. Such an ingress component 1722 may be selected by various factors, such as geographic proximity to the original content provider, available processing resources, types or characterizations of the streaming content, original content provider specifications, video packaging and origination service specifications, and the like.

At (5), the ingress component 1722A of the video packaging and origination service 1720 processes the received encoded segments to generate deterministic data. Illustratively, the deterministic data can include timestamp information related to a time of play of the set of encoded segments, sequence number identifying an order of the encoded content segment in the set of encoded segments, a time of operation of the encoder and the like. The deterministic data will be illustratively utilized to identify a same content segment or matching content segments that have been encoded according to different encoding profiles and received at different ingress components. For example, four content segments sharing a common timestamp of play but encoded according to the different encoding profiles can be considered to be the same content segment. Still further, in some embodiments, the ingress component 1722A generates the deterministic data as a set of meta-data utilized to access and generate outgoing content streams. In another example, the ingress component 1722A can conduct quality or error checking that can be included in meta-data.

At (6) the video packaging and origination service 1720 performs a determination if encoded segments determined to be matching correspond to all the requested encoded profiles. For example, to enable variable bitrate encoding, the content request may request encoded content segments according to five different encoding profiles. Accordingly, the video packaging and origination service 1720 could determine via the deterministic information whether there are five matching segments covering the five requested encoding profiles. For purposes of illustration, FIG. 21A illustrates when the segment determination indicates that all the encoded segments have not been received and the encoded segment is not ready for transmission to the client.

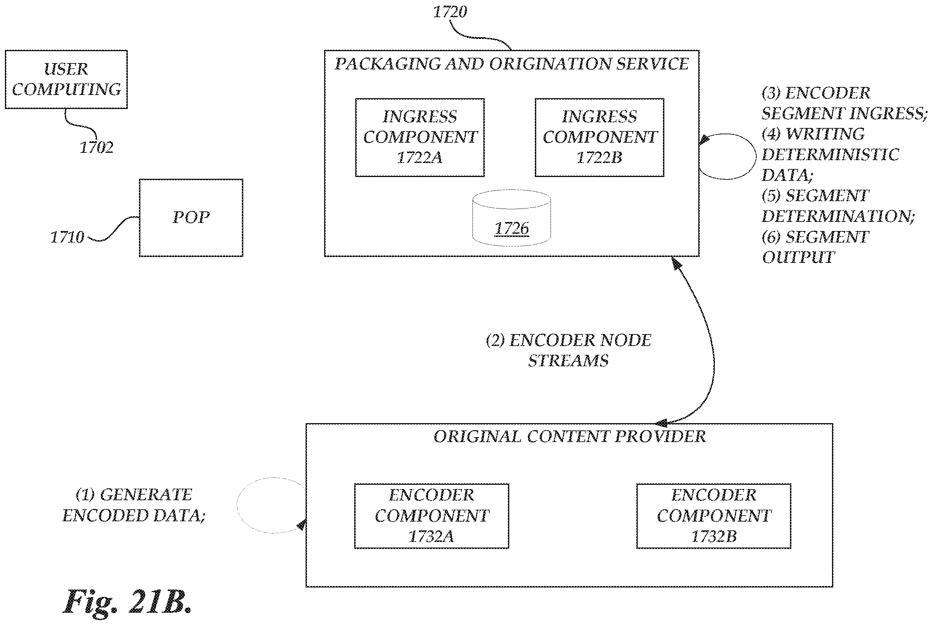

Turning now to FIG. 21B, a subsequent interaction and processing on encoded segments will be described. The interactions illustrated in FIG. 21B are based interaction after the initial transmission of multiple encoded segment stream transmission has begun. At (1), the original content provider 1730 selects or causes one or more encoders to generate encoded streams based on synchronization information or continue to generate additional encoded content streams. As described above, the video packaging and origination service 1720 may provide the synchronization information. In another embodiment, the original content provider 1730 can utilize self-providing synchronization, information provided by a third-party service or a combination. Illustratively, the original content provider can provide multiple encoder streams that can correspond to individual content streams corresponding to the different requested encoding profiles. For example, a first content stream can correspond to a first encoding bitrate and format (e.g., a first encoding profile) and a second content stream can correspond to a second encoding bitrate and format that is different. The encoding streams may be provided by different encoders, such as encoders 1732A and 1732B.

The video packaging and origination service 1720 receives the plurality of incoming encoded content streams from the encoders. More specifically, at (2), a second ingress component, such as ingress component 1722B, of the video packaging and origination service 1720 receives and processes the encoded segments from a second or subsequent received stream. In one embodiment, the subsequent processing of the second content stream may occur in parallel to the processing of the first content stream. For example, the processing of the first content stream by ingress component 1722A (FIG. 21A) may experience a latency.

At (3), the ingress component 122B of the video packaging and origination service 1720 processes the received encoded segments to generate deterministic data. Illustratively, the deterministic data can include timestamp information related to a time of play of the set of encoded segments, sequence number identifying an order of the encoded content segment in the set of encoded segments, a time of operation of the encoder and the like. The deterministic data will be illustratively utilized to identify a same content segment or matching content segments that have been encoded according to different encoding profiles and received at different ingress components. For example, four content segments sharing a common timestamp of play but encoded according to the different encoding profiles can be considered to be the same content segment.

At (5), the video packaging and origination service 1720 performs a determination if encoded segments determined to be matching correspond to all the requested encoded profiles. For example, to enable variable bitrate encoding, the content request may request encoded content segments according to five different encoding profiles. Accordingly, the video packaging and origination service 1720 could determine via the deterministic information whether there are five matching segments covering the five requested encoding profiles. For purposes of illustration, FIG. 21B illustrates when the segment determination indicates that all the encoded segments have been received and the encoded segment is not ready for transmission to the client. Accordingly, at (6), the video packaging and origination service 1720 creates a segment output of all the processed encoded segments, which can include writing to storage or indicating to an egress node that transmission can begin.

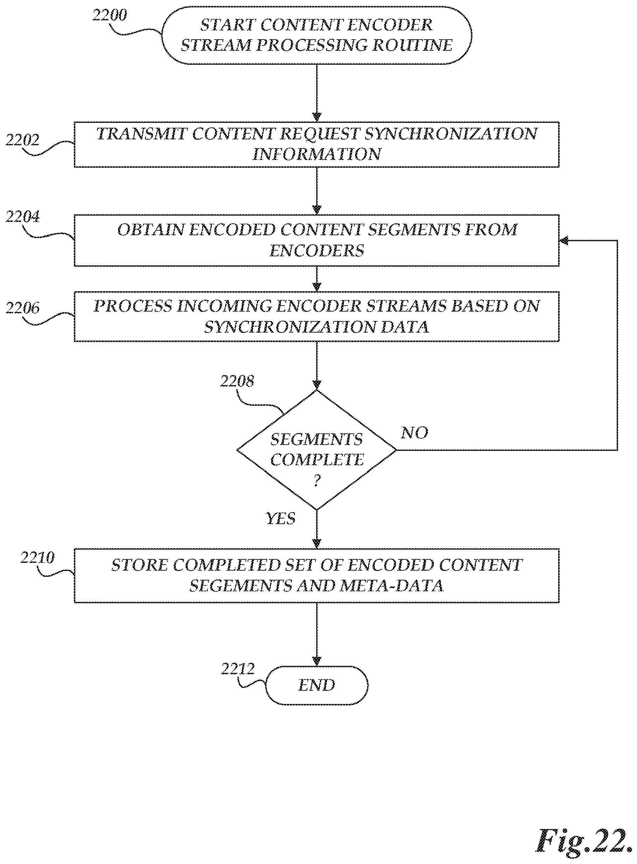

Turning now to FIG. 22, a routine 22001500 utilized by the video packaging and origination service 1720 to receive and process multiple encoder streams will be described. Routine 22001500 may be illustratively implemented by an ingress component 1722.

At block 2202, the video packaging and origination service 1720 can optionally transmit synchronization information to the original content provider 1730. Illustratively, the synchronization information is utilized by multiple encoders 1732 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 1720 to assemble the set of ordered segments, remove duplicates and identifying missing encoded segments. In embodiments in which the video packaging and origination service 1720 does not transmit synchronization information, such as if the original content provider 1730 or other service provides the synchronization information, block 2204 may be omitted.

Responsive to a request or trigger, as described above, the original content provider 1730 begins transmitting a plurality of encoded content streams to the video packaging and origination service 1720 and incorporating received/accessed synchronization information. In some embodiments, the encoders 1732B and 1732A, may be configured to transmit different content streams corresponding to a common encoded segment or set of segments encoded according to different encoding profiles. At block 2204, the video packaging and origination service 1720 receives the plurality of incoming encoded content streams from the encoders. Illustratively, the designation of a specific ingress component 1722 may be based on algorithms incorporating geographic or network information, random selection, weighted selection, load balancing, client specified information, encoding format, and the like. For example, the video packaging and origination service 1720 may maintain ingress components 1722 that have been optimized to receive different encoding profiles. In another example, the video packaging and origination service 1720 can utilize load balancing to determine which ingress component 1722 is better suited to receive an incoming stream at the time it is received. Other variations are also possible.

At block 2206, the video packaging and origination service 1720 processes the received encoded segments. For example, the video packaging and origination service 1720 can be adjustments or error correction for any of the selected encoded segments. In other embodiment, if the synchronization information does not ensure perfectly compatible encoded segments, the video packaging and origination service 1720 can extrapolate additional segments or portions to facilitate combination. Still further, in some embodiments, the ingress component 1722 of the video packaging and origination service 1720 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 1722 or content management service 1726 can conduct quality or error checking that can be included in meta-data.

At decision block 2208, a determination is made as to whether additional encoder segments streams still need to be received. As described above, the video packaging and origination service 1720 performs a determination if encoded segments determined to be matching correspond to all the requested encoded profiles. For example, to enable variable bitrate encoding, the content request may request encoded content segments according to five different encoding profiles. Accordingly, the video packaging and origination service 1720 could determine via the deterministic information whether there are five matching segments covering the five requested encoding profiles. If additional encoded segments remain unreceived or not fully processed, the routine 2200 returns to block 2204 to receive the additional encoder streams. If not, the routine 2200 proceeds to block 2210.

At block 2210, the video packaging and origination service 1720 stores the cumulative set of encoded segments for delivery to user devices 1702. As described above, the video packaging and origination service 1720 can also associate or store meta-data associated with the segments. Alternatively, the video packaging and origination service 1720 can also interact with egress nodes or generate a notification that the collected content is ready for transmission. Routine 2200 terminates at block 2212 or starts a new iteration of routine 2200.

Generally described, content providers can provide content to requesting users. With regard to video content, a content provider can implement a video packaging and origination service that is able to deliver video content to requesting users. Illustratively, a video packaging and origination service indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more.

To deliver content, content providers can organize requested content, such as a video file, into multiple segments that are then transmitted to requesting devices segment by segment. For example, in a video stream, each segment typically accounts for 2-10 seconds of video rendered on a receiving device. To provide content to the video packaging and origination service, individual content segments can be encoded by an encoder and transmitted to the video and origination service. Traditionally, a processing node on the video packaging and origination service can receive an incoming stream of encoded segments and then transmit the stream to requesting user devices. Additionally, each distinct encoded video segment (e.g., combination of bitrate encoding and format) is provided to the video packaging and origination service from a single encoder or encoding node.

Video segments can be encoded according to a defined bitrate and format, which generally defines the number of bits of data that are encoded over a measured amount of time and the specific software algorithm and resulting content representation format utilized to encode the data for transmission. For video files, bitrates are typically measured according to how many kilobits or megabits of data are processed over a second of time. By way of example, a data file that corresponds to 1 megabyte of video data encoded in one second would be considered to have an encoding bitrate of 8 mbps (e.g., 8 megabits per second) while a lower definition video file that corresponds to 45 kilobytes of video data processed in one second would be considered to have an encoding bitrate of 360 kbps (e.g., 360 kilobits per second).

To receive content, a client computing device can simply request content having a fixed encoding rate or have a fixed encoding rate selected in response to a streaming content request. Such a fixed encoding rate approach can be deficient in facilitating variance of the encoding bitrate (both positive and negative) based on factors, such as network bandwidth, client computing device utilization, quality demands, and the like. In addition to the association of the encoding bitrate, video segments can be further defined by associating the encoding bitrate with the encoding format utilized by the encoder to generate the output stream. The encoding format can correspond to a content representation format for storage or transmission of video content (such as in a data file or bitstream). Examples of encoding formats include but not limited to the motion pictures expert group ("MPEG) MPEG-2 Part 2, MPEG-4 Part 2, H.264 (MPEG-4 Part 10), H.265 high efficiency video coding ("HEVC"), Theora, RealVideo RV40, VP9, and AOMedia Video 1 ("AV1"), and the like. Depending on the complexity of the encoding profiles specifying the bitrate and format, a single encoded may be constrained for more complex encoding profiles. This can limit the ability for content providers to provide different encoding bitrate/format combinations or require utilization of increased computing device resources to provide for individual encoding nodes. Additionally, in the event of a failure in the encoding node at the content source, the video packaging and origination service does not receive content and manifests as an outage to downstream user devices.

To address at least a portion of the inefficiencies described above with regard to single encoder transmission nodes, aspects of the present application corresponding to a redundant node system for transmitting redundant encoder streams. More specifically, aspects of the present application correspond to utilization of synchronization information to allow a video packaging and origination service to receive multiple, redundant input streams corresponding to a set of content segments. Each individual stream can be provided by different encoders based on the synchronization information, such as sequence reference numbers or timestamp information. The number of encoders utilized by the content source, such as a content provider, may be based on the complexity of the encoding profile (e.g., encoded bitrate and format), available encoder computing resources, available network bandwidth, financial cost information, processing cost information and the like.

The receiving video packaging and origination service can resolve discrepancies or conflicts to form the set of encoded segments. The video packaging and origination service can select from the redundant encoding streams based on time received, quality measurements, priority designations, attributable cost, priority meta-data included in the transmitted content segments, user preferences, historical information, or other selection criteria. Additionally, in the event of a failure of one of the encoders, the video packaging and origination service can request additional encoders to complete the transmission or begin collecting additional encoded segments from other encoders.

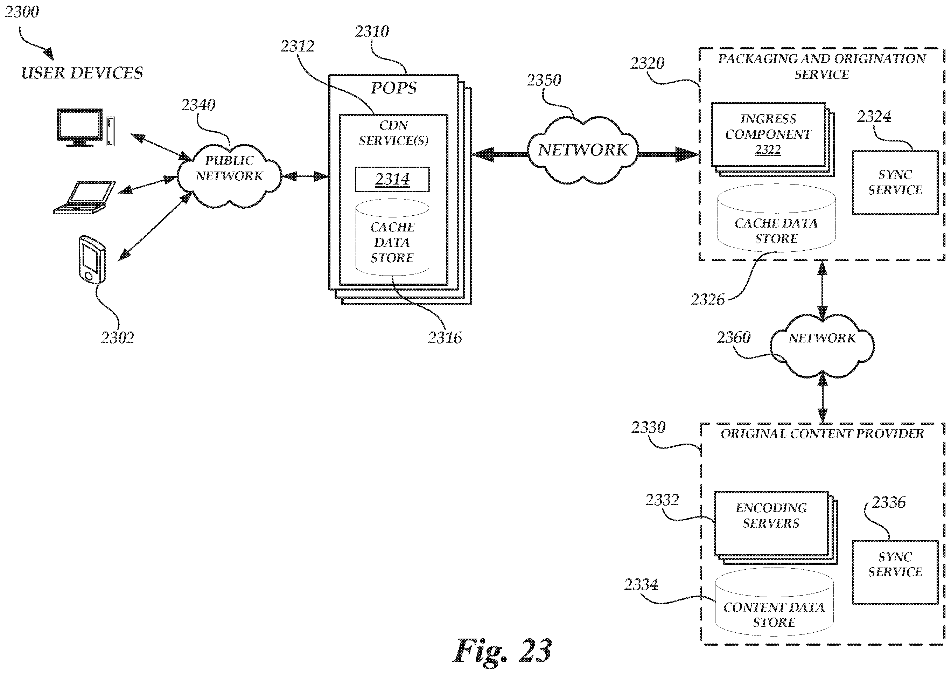

FIG. 23 illustrates a general content delivery environment 2300 for delivering content from original content providers to user devices. The content delivery environment 2300 includes a plurality of devices 2302 utilized by individual users, generally referred to as client computing devices, to request streaming or download content from a video packaging and origination service 2320. Illustratively, the video packaging and origination service 2320 indexes a collection of source video content (either live streaming or file-based video-on-demand) and delivers it to clients via a wide range of communication protocols such as HTTP Live Streaming ("HLS"), Dynamic Adaptive Streaming over HTTP ("DASH"), HTTP Dynamic Streaming ("HDS"), Real Time Messaging Protocol ("RTMP"), Smooth Streaming, and the like. Based on consumer demand, a video packaging and origination service can also provide advanced video transmission features such as just-in-time packaging of video content, digital rights management ("DRM") encryption, time-shifting, bitrate selection, catch up TV, and more. The content can be illustratively provided by one or more origin sources, such as original content provider 1730.

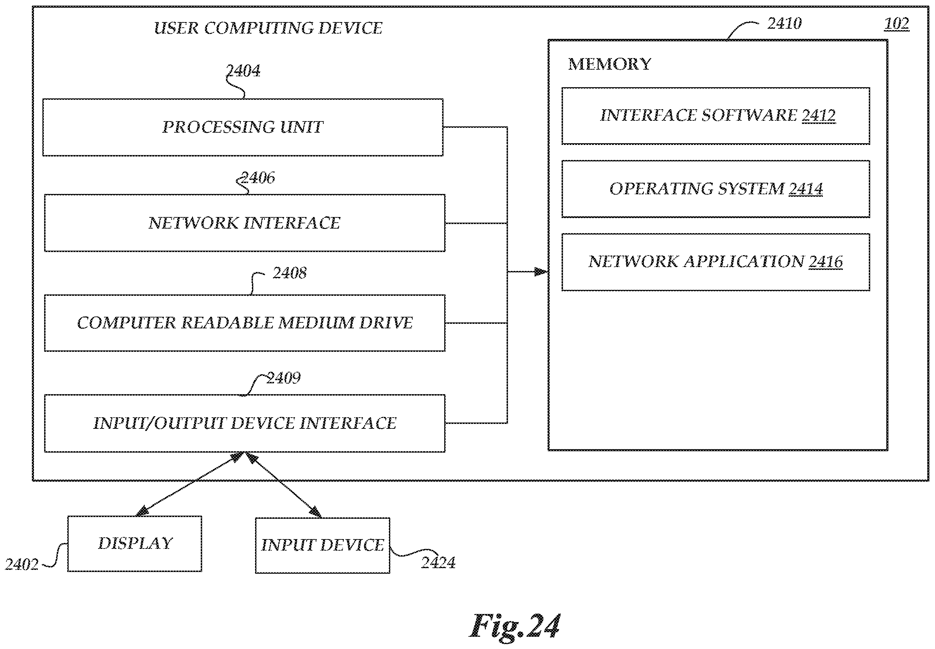

Client computing devices 2302 may include any number of different computing devices capable of communicating with the networks 1740, 2350, 2360, via a direct connection or via an intermediary. For example, individual accessing computing devices may correspond to a laptop or tablet computer, personal computer, wearable computer, server, personal digital assistant (PDA), hybrid PDA/mobile phone, mobile phone, electronic book reader, set-top box, camera, appliance (e.g., a thermostat or refrigerator), controller, digital media player, watch, eyewear, a home or car device, Internet of Things ("IoT") devices, virtual reality or augmented reality devices, and the like. Each client computing device 2302 may optionally include one or more data stores (not shown in FIG. 23) including various applications or computer-executable instructions, such as web browsers, used to implement the embodiments disclosed herein. Illustrative components of a client computing device 2302 will be described with regard to FIG. 24.

In some embodiments, a CDN service provider 2310 may include multiple edge locations from which a user device can retrieve content. Individual edge location 2312 may be referred to herein as a point of presence ("POP"), where a POP is intended to refer to any collection of related computing devices utilized to implement functionality on behalf of one or many providers. POPs are generally associated with a specific geographic location in which the computing devices implementing the POP are located, or with a region serviced by the POP. As illustrated in FIG 1, the POP 2310 can include one or more metric information processing component 2314 for processing metric information provided by client computing devices 2302 and a data store 2316 for maintain collected metric information. For example, a data center or a collection of computing devices within a data center may form a POP. In some instances, the POPs may implement one or more services, such as CDN services, data storage services, data processing services, etc. The CDN service provider 2310 may include multiple POPs located in different geographic locations so that user devices can communicate with a nearby a POP to retrieve content, thereby reducing the latency of delivering requested content.

Networks 2340, 2350, 2360 may be any wired network, wireless network, or combination thereof. In addition, the networks 2340, 2350, 2360 may be a personal area network, local area network, wide area network, cable network, fiber network, satellite network, cellular telephone network, data network, or combination thereof. In the example environment of FIG. 23, network 2340 is a global area network (GAN), such as the Internet. Protocols and components for communicating via the other aforementioned types of communication networks are well known to those skilled in the art of computer communications and thus, need not be described in more detail herein. While each of the client computing devices 2302 and video packaging and origination service 2310 are depicted as having a single connection to the network 2340, individual components of the client computing devices 2302 and video packaging and origination service 2310 may be connected to the network 2330 at disparate points. Accordingly, communication times and capabilities may vary between the components of FIG. 23. Likewise, although FIG. 23 is illustrated as having three separate networks 2340, 2350, 2360, one skilled in the relevant art will appreciate that the video packaging and origination service 2310 may utilize any number or combination of networks.

In accordance with embodiments, the video packaging and origination service 2320 includes one or more servers for receiving content from original content providers 2330 and processing the content to make available a set of received encoded bitrate segments. As described in further detail below, the video packaging and origination service 2320 includes an ingress component 2322 or multiple ingress components 2322 utilized to receive redundant encoded data streams from multiple encoding servers 132 from original content providers 2330. The video packaging and origination service 2320 can further include synchronization services 1724 for generating synchronization information utilized by the encoders, such as sequence numbers corresponding to the set of encoded segments, time stamp information related to a relative time of the encoded segments or from which relative time of encoded segments will be based, and the like. The video packaging and origination service 2320 can further include a data store 2326 for maintaining received encoded data for transmission.

It will be appreciated by those skilled in the art that the video packaging and origination service 2320 may have fewer or greater components than are illustrated in FIG23. Thus, the depiction of the video packaging and origination service 2320 in FIG. 23 should be taken as illustrative. For example, in some embodiments, components of the video packaging and origination service 2320 may be executed by one more virtual machines implemented in a hosted computing environment. A hosted computing environment may include one or more rapidly provisioned and released computing resources, which computing resources may include computing, networking or storage devices. In another example, the video packaging and origination service 2320 can include one or more egress components that can utilize the content received and processed from the ingress component 2322 and further process the content for transmission to user devices 2302. Such egress components may be implemented in conjunction with the ingress component 2322, such as in a transcoding node. In other embodiments, the egress components may be implemented and managed independently of the ingress components 2322, such as in separate stand-alone computing devices.

With continued reference to FIG. 23, the content delivery environment 2300 also includes original content providers 2330. Illustratively, the original content provider can include a plurality of encoders 132 for generating multiple encoded streams for transmission to the video packaging and origination service 2320. The original content provider 2330 can also include logic or other management components for determining how many encoders 132 should be utilized or how to manage the addition or removal of encoders. In some embodiments, the original content provider 2330 can further include synchronization services 2336 for generating synchronization information utilized by the encoders, such as sequence numbers corresponding to the set of encoded segments, time stamp information related to a relative time of the encoded segments or from which relative time of encoded segments will be based, and the like. The video packaging and origination service 2320 can further include a data store 2334 for maintaining encoded data for transmission. The synchronization services 124 and 2336 may work in conjunction or in a complimentary basis.

FIG. 24 depicts one embodiment of an architecture of an illustrative user computing device 2302 that can generate content requests and process metric information in accordance with the present application. The general architecture of the user computing device 2302 depicted in FIG.24 includes an arrangement of computer hardware and software components that may be used to implement aspects of the present disclosure. As illustrated, the user computing device 2302 includes a processing unit 2404, a network interface 2406, an input/output device interface 2409, an optional display 2402, and an input device 2424, all of which may communicate with one another by way of a communication bus.

The network interface 2406 may provide connectivity to one or more networks or computing systems, such as the network 2340 of FIG23 and the video packaging and origination service 2320 or the original content provider 2330. The processing unit 2404 may thus receive information and instructions from other computing systems or services via a network. The processing unit 2404 may also communicate to and from memory 2410 and further provide output information for an optional display 2402 via the input/output device interface 2409. The input/output device interface 2409 may also accept input from the optional input device 2424, such as a keyboard, mouse, digital pen, etc. In some embodiments, the user computing device 2302 may include more (or fewer) components than those shown in FIG. 2.

The memory 2410 may include computer program instructions that the processing unit 2404 executes in order to implement one or more embodiments. The memory 2410 generally includes RAM, ROM, or other persistent or non-transitory memory. The memory 2410 may store an operating system 2414 that provides computer program instructions for use by the processing unit 2404 in the general administration and operation of the user computing device 2302. The memory 2410 may further include computer program instructions and other information for implementing aspects of the present disclosure. For example, in one embodiment, the memory 2410 includes a network application 2416, such as browser application or media player, for accessing content and communicating with the video packaging and origination service 2320.

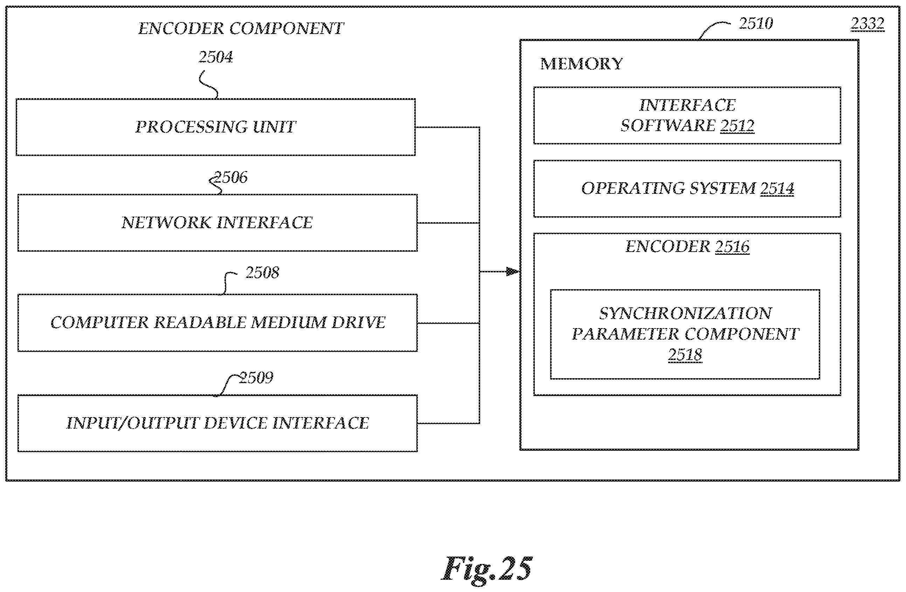

FIG. 25 depicts one embodiment of an architecture of an illustrative server for encoding content as described herein. The general architecture of the encoder 132 depicted in FIG. 25 includes an arrangement of computer hardware and software components that may be used to implement aspects of the present disclosure. As illustrated, the encoder 132 includes a processing unit 2504, a network interface 2506, a computer readable medium drive 2508, an input/output device interface 2509, all of which may communicate with one another by way of a communication bus. The components of the encoder 132 may be physical hardware components or implemented in a virtualized environment.

The network interface 2506 may provide connectivity to one or more networks or computing systems, such as the network 2350 or network 2360 of FIG. 23. The processing unit 2504 may thus receive information and instructions from other computing systems or services via a network. The processing unit 2504 may also communicate to and from memory 2510 and further provide output information for an optional display via the input/output device interface 2509. In some embodiments, the encoder 132 may include more (or fewer) components than those shown in FIG. 25.

The memory 2510 may include computer program instructions that the processing unit 2504 executes in order to implement one or more embodiments. The memory 2510 generally includes RAM, ROM, or other persistent or non-transitory memory. The memory 2510 may store an operating system 2514 that provides computer program instructions for use by the processing unit 2504 in the general administration and operation of the video packaging and origination service 2320. The memory 2510 may further include computer program instructions and other information for implementing aspects of the present disclosure. For example, in one embodiment, the memory 2510 includes interface software 2512 for receiving and processing content requests from the video packaging and origination service 2320. Additionally, the memory 2510 includes an encoder component 2516 for processing content segments. Additionally, the encoder component 2516 can further include a synchronization parameter component 2518 for utilizing the synchronization information in the encoding process to increase the likelihood that encoded segments from multiple encoders can be utilized by a video packaging and origination service 2320.

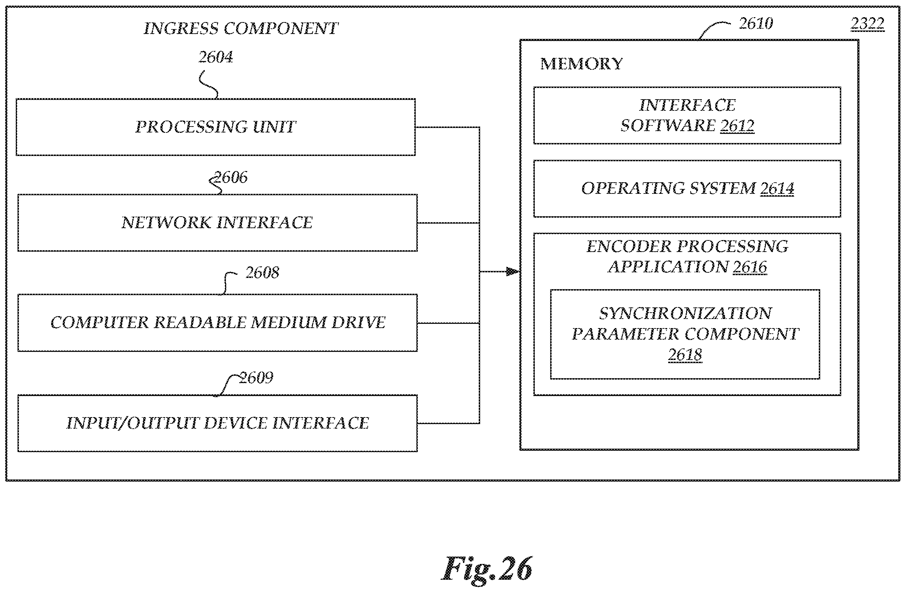

FIG. 26 depicts one embodiment of an architecture of an illustrative server for functioning as an ingress component 2322 as described herein. The general architecture of the ingress component 2322 depicted in FIG. 26 includes an arrangement of computer hardware and software components that may be used to implement aspects of the present disclosure. As illustrated, the ingress component 2322 includes a processing unit 2604, a network interface 2606, a computer readable medium drive 2608, an input/output device interface 2609, all of which may communicate with one another by way of a communication bus. The components of the ingress component 2322 may be physical hardware components or implemented in a virtualized environment.

The network interface 2606 may provide connectivity to one or more networks or computing systems, such as the network 2350 or network 2360 of FIG. 23. The processing unit 2604 may thus receive information and instructions from other computing systems or services via a network. The processing unit 2604 may also communicate to and from memory 2610 and further provide output information for an optional display via the input/output device interface 2609. In some embodiments, the ingress component 2322 may include more (or fewer) components than those shown in FIG. 26.

The memory 2610 may include computer program instructions that the processing unit 2604 executes in order to implement one or more embodiments. The memory 2610 generally includes RAM, ROM, or other persistent or non-transitory memory. The memory 2610 may store an operating system 2614 that provides computer program instructions for use by the processing unit 2604 in the general administration and operation of the ingress node. The memory 2610 may further include computer program instructions and other information for implementing aspects of the present disclosure. For example, in one embodiment, the memory 2610 includes interface software 2612 for receiving and processing content requests from the ingress component 2322. As will be described in detail below, the resulting information can include a dynamically configured bundle to encoding bitrates. Additionally, the memory 2610 includes an encoder processing application 2616 for processing incoming encoded content segments. Additionally, the ingress component 2322 can further include a synchronization parameter component 2618 for utilizing the synchronization information in the encoding process to increase the likelihood that encoded segments from multiple encoders can be utilized by the ingress component 2322.

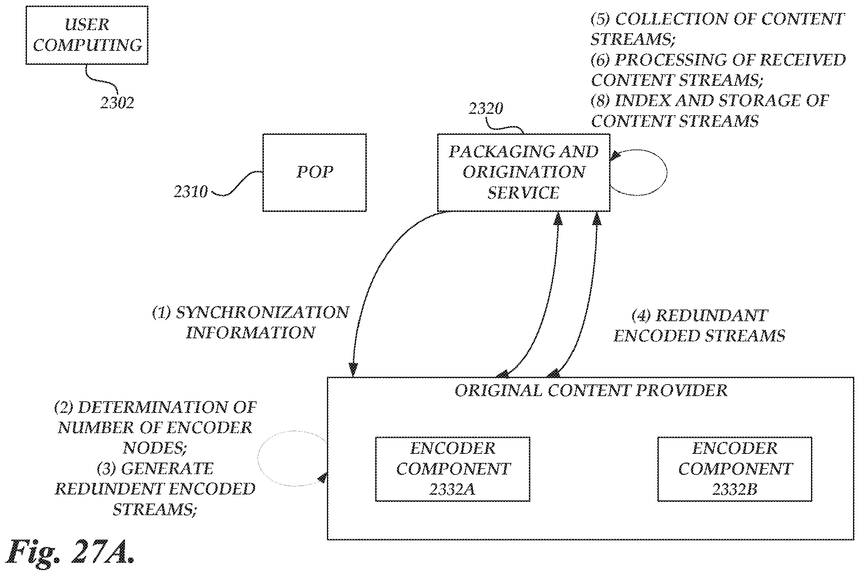

Turning now to FIGS. 5A and 5B, an illustrative interaction for the processing of content requests will be described. [0035] At (1), the video packaging and origination service 2320 can transmit synchronization information to the original content provider 2330. Illustratively, the synchronization information is utilized by multiple encoders 132 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 2320 to assemble the set of ordered segments, remove duplicates and identifying missing encoded segments. Although FIG. 27A illustrates the transmission of the synchronization information from the video packaging and origination service 2320, in some embodiments, synchronization information may not be transmitted by the video packaging and origination service 2320 and this interaction would be omitted altogether.

At (2), the receiving original content provider 2330 determines the number of encoders that will be utilized to generate the requested redundant encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, user preferences or service levels associated with the video packaging and origination service 2320, network conditions (e.g., available bandwidth, network throughput, error rates), demand from users devices (e.g., total number of requests or frequencies of requests), and the like. For example, a system experiencing a number of failures may implement a higher level of redundancy that a system that has not experienced as much failure. In another example, user preferences stored in a profile or included in a request can also be a factor in determining redundancy.

Illustratively, the content stream data may be transmitted by the original content provider 2330 responsive to a request from a user device 2302, a request from the video packaging and origination service 2320, or other request/trigger. Illustratively, the encoded content can correspond to a set of encoded profiles corresponding to the encoding bitrate and format combinations that may be made available to users. For example, the video packaging and origination service 2320 may provide a requesting user device 2302 with a set of encoding bitrate and format combinations in order to support adaptive bitrate streaming. Accordingly, the request from the original content provider may transmit the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At (3), the original content provider causes the selected number of encoders to generate redundant encoded streams. As described above, the video packaging and origination service 2320 may provide synchronization information to facilitate compatibility or to establish that the encoded content segments are substantially similar. For example, the synchronization information can be utilized so that encoded content can be within a timing range, such as +/- 1 second. In that regard, redundant segments may be generally considered to be segments that can be interchangeably utilized as transmitted or with additional processing or otherwise substantially similar. In another embodiment, the original content provider 2330 can utilize self-providing synchronization, information provided by a third-party service or a combination. At (4), the original content provider begins transmitting a plurality of encoded content streams to the video packaging and origination service 2320 and incorporating received/accessed synchronization information. As illustrated in FIG. 27a, the redundant streams can be generated from multiple encoders, such as encoding node 132A and encoding node 132B, associated with a single source.

The video packaging and origination service 2320 receives the plurality of incoming encoded content streams from the encoders. At (5), the video packaging and origination service 2320 collects encoded segments from the received streams. At (6), the video packaging and origination service 2320 processes the received encoded segments which are determined to be substantially similar or otherwise sufficiently compatible. For example, the video packaging and origination service 2320 can be adjustments or error correction for any of the selected encoded segments. In other embodiment, if the synchronization information does not ensure perfectly compatible encoded segments, the video packaging and origination service 2320 can extrapolate additional segments or portions to facilitate combination. Still further, the video packaging and origination service 2320 can implement conflict resolution from multiple overlapping content segments. For example, the video packaging and origination service 2320 can utilize a first source wins implementation or last source wins. In another example, the video packaging and origination service 2320 can utilize historical information such as error rate, quality characterizations, or performance assessments. In yet another example, the video packaging and origination service 2320 can implement user preferences or user inputs or content provider preferences or content provider inputs to select from redundant input streams. Still further, in some embodiments, the ingress component 2322 of the video packaging and origination service 2320 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 2322 or content management service 2326 can conduct quality or error checking that can be included in meta-data.

At (7) the video packaging and origination service 2320 stores the cumulative set of encoded segments for delivery to user devices 2302. Although not illustrated in FIG. 27A, the redundant input streams to do not have to be received substantially in real time or in the same order. For example, utilizing synchronization information, the video packaging and origination service 2320 can identify overlapping content segments at any point once all the segments are received and the select from one of the redundant encoded segments. Moreover, in the event of a failure of one of the source nodes, the video packaging and origination service 2320 can continue to receive from the other redundant nodes or adjust the selection algorithm to minimize the impact of the failure.

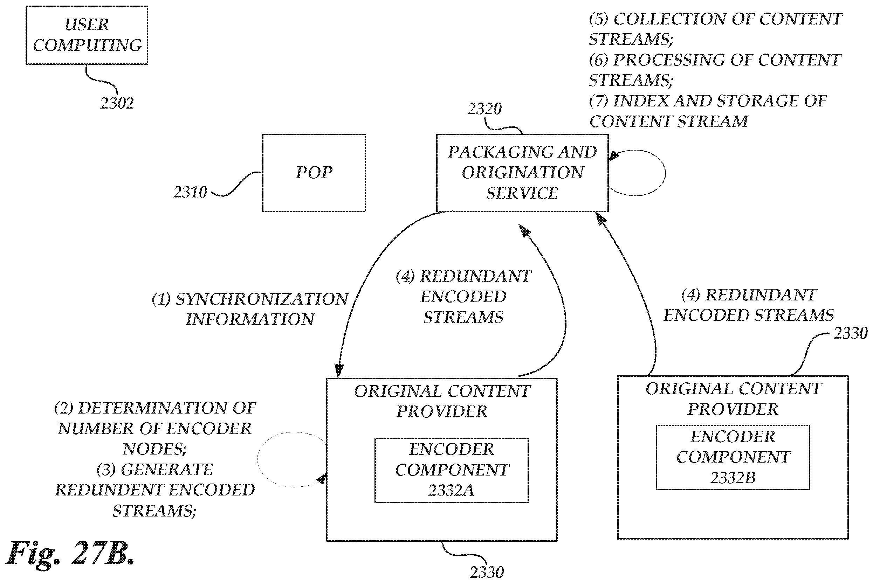

Turning now to FIG. 27B, an embodiment including content streams from distinct sources will be described. [0035] At (1), the video packaging and origination service 2320 can transmit synchronization information to the original content provider 2330A and original content provider 2330B (directly or indirectly). Illustratively, the synchronization information is utilized by multiple encoders 132 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 2320 to assemble the set of ordered segments, remove duplicates and identifying missing encoded segments. Although FIG. 27B illustrates the transmission of the synchronization information from the video packaging and origination service 2320, in some embodiments, synchronization information may not be transmitted by the video packaging and origination service 2320 and this interaction would be omitted altogether.

At (2), individual receiving original content providers 2330 determine the number of encoders that will be utilized to generate the requested redundant encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, user preferences or service levels associated with the video packaging and origination service 2320, network conditions (e.g., available bandwidth, network throughput, error rates), demand from users devices (e.g., total number of requests or frequencies of requests), and the like. For example, a system experiencing a number of failures may implement a higher level of redundancy that a system that has not experienced as much failure. In another example, user preferences stored in a profile or included in a request can also be a factor in determining redundancy.

Illustratively, the content stream data may be transmitted by the original content provider 2330 responsive to a request from a user device 2302, a request from the video packaging and origination service 2320, or other request/trigger. Illustratively, the encoded content can correspond to a set of encoded profiles corresponding to the encoding bitrate and format combinations that may be made available to users. For example, the video packaging and origination service 2320 may provide a requesting user device 2302 with a set of encoding bitrate and format combinations in order to support adaptive bitrate streaming. Accordingly, the request from the original content provider may transmit the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At (3), the original content provider causes the selected number of encoders to generate redundant encoded streams. As described above, the video packaging and origination service 2320 may provide synchronization information to facilitate compatibility. In another embodiment, the original content provider 2330 can utilize self-providing synchronization, information provided by a third-party service or a combination. At (5), the original content provider begins transmitting a plurality of encoded content streams to the video packaging and origination service 2320 and incorporating received/accessed synchronization information. As illustrated in FIG. 27B, the redundant streams can be generated from multiple encoder 132 associated with different sources.

The video packaging and origination service 2320 receives the plurality of incoming encoded content streams from the encoders. At (5), the video packaging and origination service 2320 collects encoded segments from the received streams. At (6), the video packaging and origination service 2320 processes the received encoded segments. For example, the video packaging and origination service 2320 can be adjustments or error correction for any of the selected encoded segments. In other embodiment, if the synchronization information does not ensure perfectly compatible encoded segments, the video packaging and origination service 2320 can extrapolate additional segments or portions to facilitate combination. Still further, the video packaging and origination service 2320 can implement conflict resolution from multiple overlapping content segments. For example, the video packaging and origination service 2320 can utilize a first source wins implementation or last source wins. Still further, in some embodiments, the ingress component 2322 of the video packaging and origination service 2320 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 2322 or content management service 2326 can conduct quality or error checking that can be included in meta-data. In another example, the video packaging and origination service 2320 can utilize historical information such as error rate, quality characterizations, or performance assessments. In yet another example, the video packaging and origination service 2320 can implement user preferences or user inputs or content provider preferences or content provider inputs to select from redundant input streams.

At (7) the video packaging and origination service 2320 stores the cumulative set of encoded segments for delivery to user devices 2302. Although not illustrated in FIG. 27A, the redundant input streams to do not have to be received substantially in real time or in the same order. For example, utilizing synchronization information, the video packaging and origination service 2320 can identify overlapping content segments at any point once all the segments are received and the select from one of the redundant encoded segments. Moreover, in the event of a failure of one of the source nodes, the video packaging and origination service 2320 can continue to receive from the other redundant nodes or adjust the selection algorithm to minimize the impact of the failure.

Turning now to FIG. 6, a routine 2800 utilized by the video packaging and origination service 2320 to receive and process multiple encoder streams will be described. Routine 2800 may be illustratively implemented by an ingress component 2322.

At block 2802, the video packaging and origination service 2320 can optionally transmit synchronization information to the original content provider 2330. Illustratively, the synchronization information is utilized by multiple encoders 132 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 2320 to assemble the set of ordered segments, remove duplicates and identifying missing encoded segments. In embodiments in which the video packaging and origination service 2320 does not transmit synchronization information, such as if the original content provider 2330 or other service provides the synchronization information, block 2804 may be omitted.

Responsive to the request, as described above, the original content provider 2330 begins transmitting a plurality of redundant, encoded content streams to the video packaging and origination service 2320 and incorporating received/accessed synchronization information. The transmission of the redundant streams does not have to be simultaneously received or received in the same order. At block 2804, the video packaging and origination service 2320 receives the plurality of incoming encoded content streams from the encoders. At decision block 2806, a determination is made as to whether additional encoder segments streams are received. If so, the routine 2800 returns to block 2806 to receive the additional encoder streams. If not, the routine 2800 proceeds to block 2808.

At block 2808, the video packaging and origination service 2320 processes the received encoded segments. the video packaging and origination service 2320 collects encoded segments from the received streams. For example, the video packaging and origination service 2320 can be adjustments or error correction for any of the selected encoded segments. In other embodiment, if the synchronization information does not ensure perfectly compatible encoded segments, the video packaging and origination service 2320 can extrapolate additional segments or portions to facilitate combination. Still further, the video packaging and origination service 2320 can implement conflict resolution from multiple overlapping content segments. For example, the video packaging and origination service 2320 can utilize a first source wins implementation or last source wins. In another example, the video packaging and origination service 2320 can utilize historical information such as error rate, quality characterizations, or performance assessments. In yet another example, the video packaging and origination service 2320 can implement user preferences or user inputs or content provider preferences or content provider inputs to select from redundant input streams. Still further, in some embodiments, the ingress component 2322 of the video packaging and origination service 2320 generates deterministic data included in a set of meta-data utilized to access and generate outgoing content streams. Illustratively, the deterministic data can include timestamp information related to a time of play of the set of encoded segments, sequence number identifying an order of the encoded content segment in the set of encoded segments, a time of operation of the encoder and the like. In another example, the ingress component 2322 or content management service 2326 can conduct quality or error checking that can be included in meta-data. At block 2810, the video packaging and origination service 2320 stores the cumulative set of encoded segments for delivery to user devices 2302. Routine 2800 terminates at block 2812 or starts a new iteration of routine 2800.

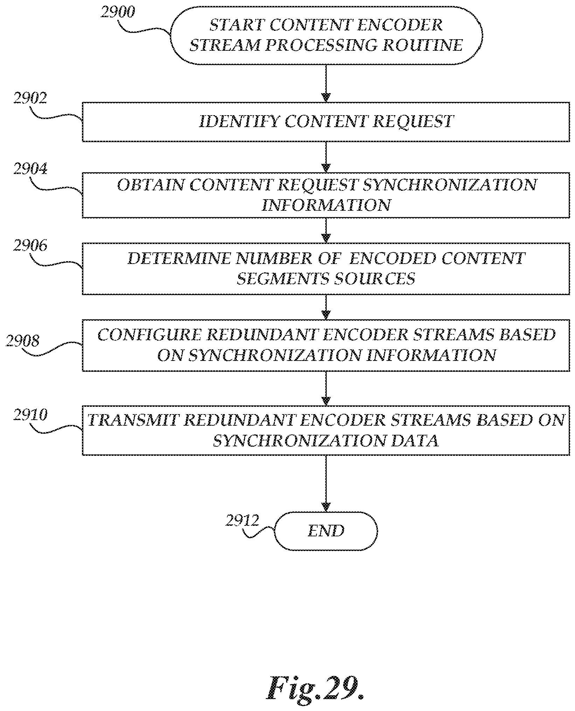

Turning now to FIG. 29, a routine 2900 utilized by to generate multiple encoder streams will be described. Routine 2900 may be illustratively implemented by multiple encoder components 132. At block 2902, the encoder component 132 (directly or indirectly) identifies a request for encoded content. Illustratively, the encoded content request can correspond to a set of encoded profiles corresponding to the encoding bitrate and format combinations that may be made available to users. For example, the video packaging and origination service 2320 may provide a set of encoding bitrate and format combinations in order to support adaptive bitrate streaming. Accordingly, the request from the video packaging and origination service 2320 may correspond to the set of identified encoding bitrates and formats or individual encoding bitrate and format combinations to supplement previously receive encoded segments. One skilled in the relevant art will appreciate that the transmission of the request or the identification of requested encoded segments (including format) can be facilitated in a number of ways.

At block 2904, the encoder can receive synchronization information or generate synchronization information. As described above, the synchronization information is utilized by multiple encoders 132 to allow encoded segments from multiple encoders to be combined seamlessly or substantially seamlessly. For example, the synchronization information can include timestamp information related to a relative timestamp of individual encoded segments in the set of encoded segments. In another example, the synchronization information can include sequence numbers for the individual segments. In another example, the synchronization information can include a time of operation or other time elapsed information. The synchronization information is incorporated into the encoded segments and then utilized by the video packaging and origination service 2320 to assemble the set of ordered segments, remove duplicates and identifying missing encoded segments.

At block 2906, the receiving original content provider 2330 determines the number of encoders that will be utilized to generate the requested encoded content streams. Illustratively, the determination the number of encoders will generally corresponding to a plurality of encoders that generate encoded content streams for identified requested content and incorporating synchronization information. In one embodiment, the determination of the number of encoders can be based on the complexity of the encoded bitrate and formation combination, available encoder resources, an attributable cost associated with the generated encoded content segments, preferences or service levels associated with the video packaging and origination service 2320, network conditions (e.g., available bandwidth, network throughput, error rates), demand from users devices (e.g., total number of requests or frequencies of requests), and the like. Still further, the video packaging and origination service 2320 can utilize a compatibility assessment information based on historical information or otherwise calculated to select.

At block 2908, the original content provider causes the selected number of encoders to generate encoded streams based on synchronization information. As described above, the video packaging and origination service 2320 may provide the synchronization information. In another embodiment, the original content provider 2330 can utilize self-providing synchronization, information provided by a third-party service or a combination. At block 2910, the original content provider begins transmitting a plurality of encoded content streams to the video packaging and origination service 2320 and incorporating received/accessed synchronization information. In some embodiments, the encoders 132B and 132A may be configured to transmit non-overlapping segments in which the encoding task for the set of segments it distributed among encoders. In other embodiments, the encoders may be configured will at least partially overlapping encoded segments. Routine 2900 terminates at block 291 or starts a new iteration of routine 2900.

All of the methods and tasks described herein may be performed and fully automated by a computer system. The computer system may, in some cases, include multiple distinct computers or computing devices (e.g., physical servers, workstations, storage arrays, cloud computing resources, etc.) that communicate and interoperate over a network to perform the described functions. Each such computing device typically includes a processor (or multiple processors) that executes program instructions or modules stored in a memory or other non-transitory computer-readable storage medium or device (e.g., solid state storage devices, disk drives, etc.). The various functions disclosed herein may be embodied in such program instructions, or may be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips or magnetic disks, into a different state. In some embodiments, the computer system may be a cloud-based computing system whose processing resources are shared by multiple distinct business entities or other users.

Depending on the embodiment, certain acts, events, or functions of any of the processes or algorithms described herein can be performed in a different sequence, can be added, merged, or left out altogether (e.g., not all described operations or events are necessary for the practice of the algorithm). Moreover, in certain embodiments, operations or events can be performed concurrently, e.g., through multi-threaded processing, interrupt processing, or multiple processors or processor cores or on other parallel architectures, rather than sequentially.

The various illustrative logical blocks, modules, routines, and algorithm steps described in connection with the embodiments disclosed herein can be implemented as electronic hardware (e.g., ASICs or FPGA devices), computer software that runs on computer hardware, or combinations of both. Moreover, the various illustrative logical blocks and modules described in connection with the embodiments disclosed herein can be implemented or performed by a machine, such as a processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the rendering techniques described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements or steps. Thus, such conditional language is not generally intended to imply that features, elements or steps are in any way required for one or more embodiments or that one or more embodiments necessarily include logic for deciding, with or without other input or prompting, whether these features, elements or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, or Z). Thus, such disjunctive language is not generally intended to, and should not, imply that certain embodiments require at least one of X, at least one of Y, and at least one of Z to each be present.

The scope of the invention is solely defined by the appended claims.

## Claims

1. A system to manage streaming content comprising:
one or more computing devices (1002, 1702, 2302) associated with a video packaging and origination service (1020, 1720, 2320), wherein the video packaging and origination service (1020, 1720, 2320) is configured to:
identify synchronization information corresponding to at least one of segment sequence numbering information or timestamp information;
obtain a first plurality of segments of a set of segments encoded according to an encoding profile from a first encoding node of a plurality of encoding nodes;
obtain a second plurality of segments of the set of segments encoded according to the encoding profile from a second encoding node of the plurality of encoding nodes, the second encoding node different from the first encoding node, wherein the first plurality of segments and the second plurality of segments are at least partially overlapping segments;
assemble at least one segment from the first plurality of segments and at least one segment from the second plurality of segments to form a set of ordered segments utilizing the synchronization information, wherein forming the set of ordered segments includes removing duplicate segments of the at least partially overlapping segments based on one or more of a quality measurement, a priority designation, and attributable cost; and
store the set of ordered segments and meta-data associated with the stored set of ordered segments.

2. The system of claim 1, wherein the video packaging and origination service (1020, 1720, 2320) transmits the at least one of segment sequence numbering information or time stamp information to an original content provider (1030, 1730, 2330).

3. The system of claim 1, wherein the video packaging and origination service (1020, 1720, 2320) transmits information that identifies a source of the at least one of segment sequence numbering information or time stamp information.

4. The system of claim 1, wherein the first plurality of segments and the second plurality of segments are based on cost information associated with generating encoded segments.

5. The system of claim 1 wherein the video and origination service (1020, 1720, 2320) is further configured to select a number of encoding nodes to encode according to the encoding profile based at least in part on a complexity of the encoding profile.

6. A computer-implemented method to manage transmission of content comprising:
obtaining a first portion of a set of segments associated with a request for streaming content from a first identifiable encoder of a plurality of encoders encoding according to an encoding profile;
obtaining a second portion of the set of segments associated with the request for the streaming content from a second identifiable encoder of the plurality of encoders encoding according to the encoding profile and different from the first identifiable encoder, wherein the segments from the first and second portions are at least partially overlapping segments;
utilizing synchronization information to assemble the set of segments based on a combination of the first portion and the second portion, wherein assembling the set of segments includes removing duplicate segments based on one or more of a quality measurement, a priority designation, and attributable cost; and
storing the set of segments.

7. The computer-implemented method of claim 6 further comprising storing meta-data associated with the combination of the first portion and the second portion.

8. The computer-implemented method of claim 6 further comprising transmitting a request for synchronization information for utilization in the first and second portions of the set of segments.

9. The computer-implemented method of claim 6, wherein the request for streaming content includes cost selection information for use in determining the first portion and the second portion.

10. The computer-implemented method of claim 6 wherein the synchronization information is incorporated into the first portion and the second portion of the set of segments.

11. The computer-implemented method of claim 6, wherein assembling the first and second portions to form the set of segments includes designating a default source of the set of segments.

12. The computer-implemented method of claim 6, wherein assembling the first and second portions to form the set of segments includes selecting segments based on a time of receipt.

13. The computer-implemented method of claim 6 further comprising determining a failure in the first identifiable encoder.

14. The computer-implemented method of claim 13 further comprising requesting at least one segment from a third identifiable encoder of the plurality of encoders responsive to the determined failure of the first identifiable encoder.

15. The computer-implemented method of claim 6 wherein a number of utilized encoders of the plurality of encoders is based at least in part on a complexity of the encoding profile.

## Patentansprüche

1. System zum Verwalten von Streaming-Inhalten, umfassend:
ein oder mehrere Computergeräte (1002, 1702, 2302), die in Verbindung mit einem Videoverpackungs- und -erstellungsdienst (1020, 1720, 2320) stehen, wobei der Videoverpackungs- und -erstellungsdienst (1020, 1720, 2320) konfiguriert ist zum:
Identifizieren von Synchronisationsinformationen, die zumindest einer der Segmentsequenz-Nummerierungsinformationen oder Zeitstempelinformationen entsprechen;
Erhalten einer ersten Vielzahl von Segmenten aus einem Satz von Segmenten, die gemäß einem Codierungsprofil codiert sind, von einem ersten Codierungsknoten einer Vielzahl von Codierungsknoten;
Erhalten einer zweiten Vielzahl von Segmenten aus dem Satz von Segmenten, die gemäß dem Codierungsprofil codiert sind, von einem zweiten Codierungsknoten der Vielzahl von Codierungsknoten, wobei sich der zweite Codierungsknoten von dem ersten Codierungsknoten unterscheidet, wobei die erste Vielzahl von Segmenten und die zweite Vielzahl von Segmenten zumindest teilweise überlappende Segmente sind;
Zusammenfügen zumindest eines Segments aus der ersten Vielzahl von Segmenten und zumindest eines Segments aus der zweiten Vielzahl von Segmenten, um einen Satz von geordneten Segmenten unter Verwendung der Synchronisationsinformationen zu bilden, wobei das Bilden des Satzes von geordneten Segmenten ein Entfernen von doppelten Segmenten der zumindest teilweise überlappenden Segmente basierend auf einem oder mehreren von einem Qualitätsmaß, einer Prioritätskennzeichnung und zurechenbaren Kosten beinhaltet; und
Speichern des Satzes von geordneten Segmenten und von Metadaten, die mit dem gespeicherten Satz von geordneten Segmenten verbunden sind.

2. System nach Anspruch 1, wobei der Videoverpackungs- und - erstellungsdienst (1020, 1720, 2320) die zumindest eine der Segmentsequenz-Nummerierungsinformationen oder Zeitstempelinformationen an einen Anbieter von Originalinhalten (1030, 1730, 2330) überträgt.

3. System nach Anspruch 1, wobei der Videoverpackungs- und - erstellungsdienst (1020, 1720, 2320) Informationen überträgt, die eine Quelle der zumindest einen der Segmentsequenz-Nummerierungsinformationen oder Zeitstempelinformation identifizieren.

4. System nach Anspruch 1, wobei die erste Vielzahl von Segmenten und die zweite Vielzahl von Segmenten auf Kosteninformationen im Zusammenhang mit einem Erzeugen codierter Segmente basieren.

5. System nach Anspruch 1, wobei der Video- und Erstellungsdienst (1020, 1720, 2320) ferner konfiguriert ist, dass er eine Anzahl von Codierungsknoten zum Codieren gemäß dem Codierungsprofil zumindest teilweise basierend auf einer Komplexität des Codierungsprofils auswählt.

6. Computerimplementiertes Verfahren zur Verwaltung der Übertragung von Inhalten, umfassend:
Erhalten eines ersten Teils eines Satzes von Segmenten im Zusammenhang mit einer Anforderung von Streaming-Inhalten von einem ersten identifizierbaren Codierer einer Vielzahl von Codierern, der gemäß einem Codierungsprofil codiert;
Erhalten eines zweiten Teils des Satzes von Segmenten im Zusammenhang mit der Anforderung der Streaming-Inhalte von einem zweiten identifizierbaren Codierer der Vielzahl von Codierern, der gemäß dem Codierungsprofil codiert und sich von dem ersten identifizierbaren Codierer unterscheidet, wobei die Segmente aus dem ersten und dem zweiten Teil zumindest teilweise überlappende Segmente sind;
Verwenden von Synchronisationsinformationen zum Zusammensetzen des Satzes von Segmenten basierend auf einer Kombination von dem ersten Teil und dem zweiten Teil, wobei das Zusammensetzen des Satzes von Segmenten ein Entfernen von doppelten Segmenten basierend auf einem oder mehreren von einem Qualitätsmaß, einer Prioritätskennzeichnung und zurechenbaren Kosten beinhaltet; und
Speichern des Satzes von Segmenten.

7. Computerimplementiertes Verfahren nach Anspruch 6, das ferner ein Speichern von Metadaten umfasst, die mit der Kombination von dem ersten Teil und dem zweiten Teil verbunden sind.

8. Computerimplementiertes Verfahren nach Anspruch 6, das ferner ein Übertragen einer Anforderung von Synchronisationsinformationen zur Verwendung in dem ersten und dem zweiten Teil des Satzes von Segmenten umfasst.

9. Computerimplementiertes Verfahren nach Anspruch 6, wobei die Anforderung von Streaming-Inhalten Kostenselektionsinformationen zur Verwendung beim Bestimmen des ersten Teils und des zweiten Teils enthält.

10. Computerimplementiertes Verfahren nach Anspruch 6, wobei die Synchronisationsinformationen in den ersten Teil und den zweiten Teil des Satzes von Segmenten integriert werden.

11. Computerimplementiertes Verfahren nach Anspruch 6, wobei das Zusammensetzen des ersten und des zweiten Teils, um den Satz von Segmenten zu bilden, ein Festlegen einer Standardquelle des Satzes von Segmenten umfasst.

12. Computerimplementiertes Verfahren nach Anspruch 6, wobei das Zusammensetzen des ersten und des zweiten Abschnitts, um den Satz von Segmenten zu bilden, ein Auswählen von Segmenten basierend auf einer Empfangszeit umfasst.

13. Computerimplementiertes Verfahren nach Anspruch 6, das ferner ein Ermitteln einer Störung in dem ersten identifizierbaren Codierer umfasst.

14. Computerimplementiertes Verfahren nach Anspruch 13, das ferner ein Anfordern mindestens eines Segments von einem dritten identifizierbaren Codierer der Vielzahl von Codierern als Reaktion auf die ermittelte Störung des ersten identifizierbaren Codierers umfasst.

15. Computerimplementiertes Verfahren nach Anspruch 6, wobei eine Anzahl von verwendeten Codierern der Vielzahl von Codierern zumindest teilweise auf einer Komplexität des Codierungsprofils basiert.

## Revendications

1. Système pour gérer un contenu de diffusion en continu comprenant :
un ou plusieurs dispositifs informatiques (1002, 1702, 2302) associés à un service de groupage et d'émission de vidéos (1020, 1720, 2320), dans lequel le service de groupage et d'émission de vidéos (1020, 1720, 2320) est configuré pour :
identifier des informations de synchronisation correspondant à au moins l'une parmi des informations de numérotation de séquences de segment ou des informations d'horodatage ;
obtenir une première pluralité de segments d'un ensemble de segments codés selon un profil de codage auprès d'un premier noeud de codage d'une pluralité de noeuds de codage ;
obtenir une deuxième pluralité de segments de l'ensemble de segments codés selon le profil de codage à partir d'un deuxième noeud de codage de la pluralité de noeuds de codage, le deuxième noeud de codage étant différent du premier noeud de codage, dans lequel la première pluralité de segments et la deuxième pluralité de segments sont des segments se chevauchant au moins partiellement ;
assembler au moins un segment issu de la première pluralité de segments et au moins un segment issu de la deuxième pluralité de segments pour former un ensemble de segments ordonnés par l'utilisation des informations de synchronisation, dans lequel la formation de l'ensemble de segments ordonnés inclut l'élimination de segments dupliqués des segments se chevauchant au moins partiellement sur la base d'un ou plusieurs parmi une mesure de qualité, une désignation de priorité et un coût attribuable ; et
stocker l'ensemble de segments ordonnés et des métadonnées associées à l'ensemble de segments ordonnés stocké.

2. Système selon la revendication 1, dans lequel le service de groupage et d'émission vidéo (1020, 1720, 2320) transmet les au moins unes parmi des informations de numérotation de séquence de segment ou des informations d'horodatage à un fournisseur de contenu d'origine (1030, 1730, 2330).

3. Système selon la revendication 1, dans lequel le service de groupage et d'émission de vidéos (1020, 1720, 2320) transmet des informations qui identifient une source de l'au moins une parmi des informations de numérotation de séquence de segment ou des informations d'horodatage.

4. Système selon la revendication 1, dans lequel la première pluralité de segments et la deuxième pluralité de segments sont basées sur des informations de coût associées à la génération de segments codés.

5. Système selon la revendication 1, dans lequel le service de groupage et d'émission de vidéos (1020, 1720, 2320) est en outre configuré pour sélectionner un certain nombre de noeuds de codage à coder selon le profil de codage sur la base au moins en partie d'une complexité du profil de codage.

6. Procédé mis en oeuvre par ordinateur pour gérer la transmission de contenu comprenant :
l'obtention d'une première partie d'un ensemble de segments associés à une demande de contenu de diffusion en continu auprès d'un premier codeur identifiable d'une pluralité de codeurs codant selon un profil de codage ;
l'obtention d'une deuxième partie de l'ensemble de segments associés à la demande du contenu de diffusion en continu auprès d'un deuxième codeur identifiable de la pluralité de codeurs codant selon le profil de codage et différent du premier codeur identifiable, dans lequel les segments des première et deuxième parties sont au moins des segments se chevauchant au moins partiellement ;
l'utilisation d'informations de synchronisation pour assembler l'ensemble de segments sur la base d'une combinaison de la première partie et de la deuxième partie, dans lequel l'assemblage de l'ensemble de segments inclut l'élimination de segments dupliqués sur la base d'un ou plusieurs parmi une mesure de qualité, une désignation de priorité et un coût attribuable ; et
le stockage de l'ensemble de segments.

7. Procédé mis en oeuvre par ordinateur selon la revendication 6 comprenant en outre le stockage de métadonnées associées à la combinaison de la première partie et de la deuxième partie.

8. Procédé mis en oeuvre par ordinateur selon la revendication 6 comprenant en outre la transmission d'une demande d'informations de synchronisation pour une utilisation dans les première et deuxième parties de l'ensemble de segments.

9. Procédé mis en oeuvre par ordinateur selon la revendication 6, dans lequel la demande de contenu de diffusion en continu inclut des informations de sélection de coût à utiliser dans la détermination de la première partie et de la deuxième partie.

10. Procédé mis en oeuvre par ordinateur selon la revendication 6, dans lequel les informations de synchronisation sont incorporées dans la première partie et la deuxième partie de l'ensemble de segments.

11. Procédé mis en oeuvre par ordinateur selon la revendication 6, dans lequel l'assemblage des première et deuxième parties pour former l'ensemble de segments inclut la désignation d'une source par défaut de l'ensemble de segments.

12. Procédé mis en oeuvre par ordinateur selon la revendication 6, dans lequel l'assemblage des première et deuxième parties pour former l'ensemble de segments inclut la sélection de segments sur la base d'une heure de réception.

13. Procédé mis en oeuvre par ordinateur selon la revendication 6 comprenant en outre la détermination d'une défaillance dans le premier codeur identifiable.

14. Procédé mis en oeuvre par ordinateur selon la revendication 13 comprenant en outre la demande d'au moins un segment auprès d'un troisième codeur identifiable de la pluralité de codeurs en réponse à la défaillance déterminée du premier codeur identifiable.

15. Procédé mis en oeuvre par ordinateur selon la revendication 6, dans lequel un nombre de codeurs utilisés de la pluralité de codeurs est basé au moins en partie sur une complexité du profil de codage.
